# EUROPEAN PATENT SPECIFICATION

(11) **EP 3 963 368 B1**
(45) Date of publication and mention of the grant of the patent: **17.12.2025**
(21) Application number: 20799464.1
(22) Date of filing: 30.04.2020
(51) Int. Cl.: G01S 17/02, G01S 17/10, G01S 7/487, G01S 7/4865

(54) **TEMPORAL JITTER IN A LIDAR SYSTEM**
ZEITLICHER JITTER IN EINEM LIDAR-SYSTEM
GIGUE TEMPORELLE DANS UN SYSTÈME LIDAR

(30) Priority: 01.05.2019 US 201962841538 P
(43) Date of publication of application: 09.03.2022
(73) Proprietor: Ouster, Inc., San Francisco, CA 94110 (US)
(72) Inventor: PACALA, Angus, San Francisco, California 94110 (US)
(74) Representative: Carpmaels & Ransford LLP
(86) International application number: PCT/US2020/030856
(87) International publication number: WO 2020/223561

(56) References cited:
- EP-A1- 3 285 087
- US-A1- 2011 224 840
- US-A1- 2012 261 729
- US-A1- 2015 124 241
- US-A1- 2017 176 578
- US-A1- 2019 011 567

## Description

### BACKGROUND

The present disclosure relates generally to light imaging, detection and ranging (LIDAR) systems and in particular to use of temporal random jitter for reducing crosstalk and range aliasing in LIDAR systems.

LIDAR systems measure distance to a target by illuminating the target with a pulsed laser light and measuring the reflected pulses with a sensor. Time-of-flight measurements can then be used to make a digital three-dimensional (3D) representation of the target. LIDAR systems can be used for a variety of applications where 3D depth images are useful including archaeology, geography, geology, forestry, mapping, construction, medical imaging, security, and military applications, among others. As just one example, autonomous vehicles can use LIDAR for obstacle detection and avoidance as well as vehicle navigation. As another example, a security system can use LIDAR for detecting the 3D location and movement of a possible intruder in a restricted area.
In EP 3285087 A1 there is described a sensor arrangement for determining a time-of-flight of electromagnetic radiation has an emitter for emitting a plurality of sending pulses in response to respective trigger pulses of a control signal, and a detector configured to detect received pulses.
In US 2015/124241 A1, there is described a measurement device for measuring an optical distance of an object includes an emission device configured to emit a first signal towards the object.
In US 2019/011567 A1, there is described a solid state electronic scanning LIDAR system that includes a scanning focal plane transmitting element and a scanning focal plane receiving element whose operations are synchronized so that the firing sequence of an emitter array in the transmitting element corresponds to a capturing sequence of a photosensor array in the receiving element.

### SUMMARY

The scope of the invention is defined by the independent claims. Embodiments of the invention are defined in the dependent claims. Certain embodiments of inventions described herein relate to LIDAR systems in which per-shot jitter is applied to create variation in the interval between successive emitter pulses. Operation of the detectors is synchronized with operation of the emitters so that a consistent time of flight measurement corresponds to a consistent distance regardless of jitter. Application of per-shot jitter can reduce the effect of crosstalk from other sources of pulsed light and can also reduce range aliasing effects. Reducing effects of crosstalk and/or range aliasing can improve accuracy of ranging operations.

In some embodiments, a LIDAR system includes a light transmission module, a light sensing module, and a timing controller coupled to the light transmission module and the light sensing module. The light transmission module has an emitter to emit a light pulse during each of a plurality of shots in response to a trigger pulse. The light sensing module has at least one light sensor channel to receive light and is configured to generate, responsive to the trigger pulse, a histogram of received light intensity as a function of time for a sequence of time bins. The light sensing module also has a first memory circuit configured to accumulate the histogram across the plurality of shots. The timing controller is configured to generate a sequence of trigger pulses to synchronize operation of the light transmission module and the light sensing module for each shot and can be further configured to apply a per-shot jitter to each trigger pulse. The per-shot jitter varies for different shots, and for at least some of the shots in the plurality of shots, the per-shot jitter is greater than one time bin.

Per-shot jitter can be selected in various ways, e.g., using equal-energy sampling techniques. Jitter values can be selected within a predefined range (e.g., up to 20%, 50%, 100%, 120% or some other fraction of a total number of time bins in the histogram). In some embodiments, a second memory circuit can store a master jitter sequence containing a sequence of jitter values uniformly distributed over a range of jitter values, and the timing controller can be further configured to select the per-shot jitter for each trigger pulse according to the master jitter sequence. In some embodiments, control logic can be used to randomly select a starting position in the master jitter sequence during a system startup operation.

In some embodiments, the LIDAR system can also include a processor configured to analyze the histogram to determine whether crosstalk is present and to adaptively modify the per-shot jitter in response to determining that crosstalk is present. In some embodiments, other operating behaviors can also be adaptively modified, e.g., introducing or changing a pulse-coding scheme using pulse trains. In some embodiments, modifications can be applied selectively in a direction associated with the crosstalk.

In some embodiments, the same per-shot jitter can be applied to all emitter and sensor channels of the LIDAR array. In other embodiments, different per-shot jitter can be applied to different emitter and sensor channels.

In some embodiments, a method of operating a LIDAR system includes capturing a number of shots and subsequently to capturing shots, computing ranging information based at least in part on the histogram. Capturing each shot includes determining a per-shot jitter; generating, in a timing controller of the LIDAR system, a trigger pulse at a time determined based at least in part on the per-shot jitter; operating a light-transmission module of the LIDAR system to emit a light pulse synchronized with the trigger pulse; and operating a light-sensing module of the LIDAR system synchronously with the trigger pulse to receive light and to accumulate a histogram of received light intensity as a function of time, the histogram defining a series of time bins. The histogram is accumulated across all of the shots, and for at least some of the shots, the per-shot jitter is greater than one time bin.

The following detailed description will provide a better understanding of the nature and advantages of the claimed invention.

### BRIEF DESCRIPTION OF THE DRAWINGS

FIGs. 1A and 1B show examples of automotive applications for LIDAR systems that can be used in connection with some embodiments described herein.
FIG. 2 illustrates a block diagram of an exemplary LIDAR system according to some embodiments.
FIG. 3 shows a simplified side view of components of a light ranging device according to some embodiments.
FIG. 4 shows an example of operation of a LIDAR channel of LIDAR system as a function of time for a single "shot."
FIGs. 5A-5D show an example of accumulating a histogram of photon counts per time bin in the presence of inter-system crosstalk.
FIG. 6 illustrates per-shot jitter according to some embodiments of the present invention.
FIGs. 7A-7D show an example of accumulating a histogram of photon counts per time bin with per-shot jitter according to some embodiments of the present invention.
FIG. 8 shows a graphical representation of an example master jitter sequence according to some embodiments of the present invention.
FIG. 9 shows a flow diagram of a process for operating a LIDAR channel according to some embodiments of the present invention.
FIG. 10 shows a flow diagram of a process that can be used in some embodiments to infer the presence of a crosstalk source from histogram data.
FIG. 11 shows a flow diagram of a process that can be used in some embodiments to infer the presence of a crosstalk source from histogram data collected using a background mode.
FIG. 12 is a flow diagram of a process for detecting crosstalk in a LIDAR system and adaptively modifying operation of the LIDAR system to reduce the effect of crosstalk according to some embodiments.
FIG. 13 shows a timeline view illustrating range aliasing that can occur in the absence of jitter.
FIG. 14 shows a timeline view illustrating removal of range aliasing by applying per-shot jitter according to some embodiments of the present invention.

### DETAILED DESCRIPTION

### 1. LIDAR System Overview

Some embodiments described herein relate to techniques for reducing crosstalk in LIDAR systems that emit pulses of light at specified times and use the time between emitting a pulse and detecting reflected light from the pulse to produce ranging data. To facilitate understanding of the disclosed techniques, examples of LIDAR systems and operations will be described. It should be understood that embodiments of the claimed invention can be realized in many different LIDAR systems, not limited to the example systems specifically described.

### 1.1.Example LIDAR Systems

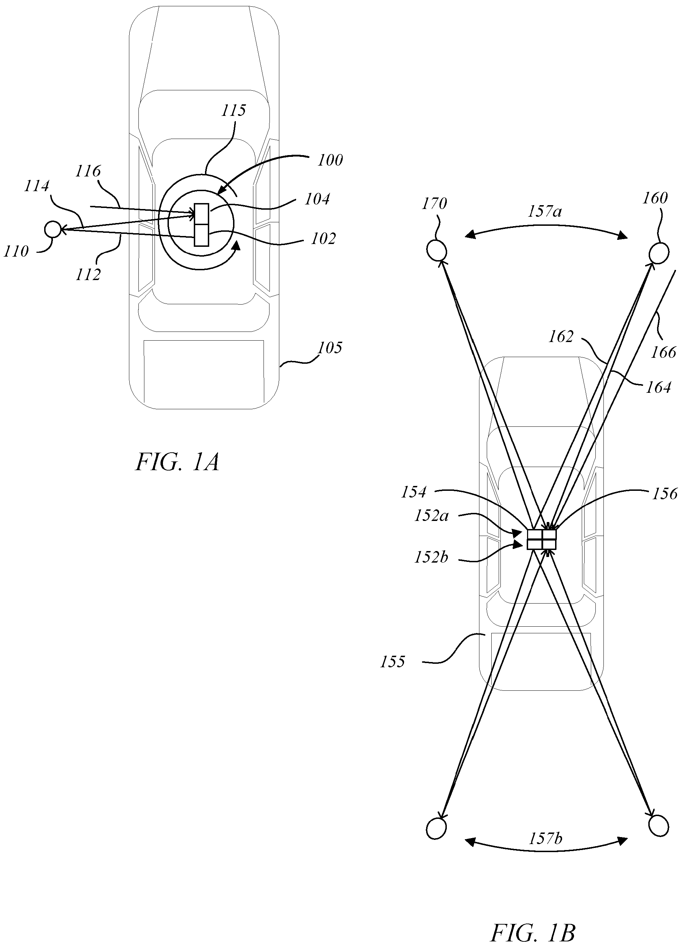

FIGs. 1A and 1B show examples of automotive applications for LIDAR systems that can be used in connection with some embodiments described herein. The automotive application is chosen here merely for the sake of illustration and the sensors described herein may be employed in other types of vehicles, e.g., boats, aircraft, trains, etc., as well as in a variety of other applications where 3D depth images are useful, such as medical imaging, geodesy, geomatics, archaeology, geography, geology, geomorphology, seismology, forestry, atmospheric physics, security systems, laser guidance, airborne laser swath mapping (ALSM), and laser altimetry.

FIG. 1A shows an example of an angular scanning (e.g., rotating or spinning) LIDAR system 100 in an automotive application. According to some embodiments, scanning LIDAR system 100 can be mounted on the roof of a vehicle 105 as shown. In other embodiments one or more LIDAR and/or imaging sensors can be mounted on other locations of a vehicle including, but not limited to, the front or back of the vehicle, the sides of the vehicle and/or corners of the vehicle.

Scanning LIDAR system 100 can incorporate a light transmission module (also referred to as a light Tx module) 102 for emitting laser pulses and/or a light receiving module (also referred to as a light Rx module) 104 that can incorporate a sensor array to sense reflected light from laser pulses emitted by light Tx module 102. In some embodiments, light Tx module 102 can be disposed in the same housing as light Rx module 104.

LIDAR system 100 can employ a scanning architecture, where the orientation of light Tx module 102 and light Rx module 104 can be scanned around one or more fields of view 110 (e.g., a 360 degree field in some embodiments) within an external field or scene that is external to vehicle 105. In the case of the scanning architecture, emitted light 112 can be pulsed while LIDAR system 100 scans over the surrounding environment. For example, light Tx module 102 can emit one or more pulsed output beams, and scanning LIDAR system 100 can be scanned, rotated, to illuminate different portions of a scene around the vehicle at different times. In some embodiments, the scanning, represented by rotation arrow 115, can be implemented by mechanical means, e.g., by mounting the light emitters and sensors to a rotating column or platform. In some embodiments, the scanning can be implemented through other mechanical means such as through the use of galvanometers. Chip-based steering techniques can also be employed, e.g., by using microchips that employ one or more MEMS based reflectors, e.g., such as a digital micro-mirror (DMD) device, a digital light processing (DLP) device, and the like. In some embodiments, the scanning can be effectuated through non-mechanical means, e.g., by using electronic signals to steer one or more optical phased arrays.

In operation, light Tx module 102 can be operated to generate pulsed beams of light, such as light beam 112, at known times while scanning LIDAR system 100 is at a particular orientation. Objects within the scene (e.g., object 110) can reflect portions of the light pulses that are emitted from light Tx module 102. One or more reflected portions then travel back to scanning LIDAR system 100 and can be detected by light Tx module 104. For example, light pulse 112 can be reflected off object 110, producing a reflected portion 114. Reflected portion 114 can be detected by light Rx module 104. In addition, extraneous light 116 from other sources may also be detected by light Rx module 104. As described below, extraneous light 116 may affect ranging measurements made using scanning LIDAR system 100. In some embodiments, LIDAR system 100 can be operated in a manner intended to reduce the effect of extraneous light 116 on ranging measurements.

FIG. 1B illustrates an implementation 150 where static LIDAR systems 152a-b are implemented on top of a road vehicle 155. Each static LIDAR system 152a-b can face a different direction (possibly with partially and/or non-overlapping fields of views between units) so as to capture a composite field of view that is larger than each unit is capable of capturing on its own. For instance, LIDAR system 152a can capture a field of view 157a, and LIDAR system 152b can capture a field of view 157b. In some embodiments, the number of static LIDAR systems, the placement of the static LIDAR systems, and the fields of view of each static LIDAR system can be chosen to obtain a majority of, if not the entirety of, a 360 degree field of view of the environment surrounding the vehicle.

Referring to static LIDAR system 152a by way of example, each static LIDAR system can include a light transmission module (also referred to as a light Tx module) 154 and a light receiving module (also referred to as a light Rx module) 156. Light Tx module 154 and light Rx module 156 can be similar or identical to light Tx module 102 and light Rx module 104 of scanning LIDAR system 100 of FIG. 1A. For example, light Tx module 154 can be operated to generate pulsed beams of light, such as light beam 162, at known times. Objects within the scene (e.g., object 160) can reflect portions of the light pulses that are emitted from light Tx module 154. One or more reflected portions then travel back to static LIDAR system 152a and can be detected by light Tx module 156. For example, light beam 162 can be reflected off object 160, producing a reflected portion 164. Reflected portion 164 can be detected by light Rx module 156. In addition, extraneous light 166 from other sources may also be detected by light Rx module 156. As described below, extraneous light 156 may affect ranging measurements made using static LIDAR system 152a.

In some embodiments, each of static LIDAR systems 152a, 152b can image its entire field of view (shown as areas 157a and 157b, respectively) at one time. In other embodiments, static LIDAR systems 152a, 152b can electronically scan a scene to capture images of the scene. As used herein, "electronic scanning" refers to collecting data for different portions of a scene at different times without physical movement (e.g., reorientation) of the sensor array; electronic scanning is thus distinguished from the rotating/spinning operations described above. Electronic scanning can be implemented, e.g., by activating different portions of a LIDAR emitter array in light Tx module 154 and corresponding subsets of an array of LIDAR sensor channels in light Rx module 156 at different times, or by other means, such as chip-based beam steering techniques, e.g., by using microchips that employ one or more MEMS based reflectors, such as a digital micromirror (DMD) device, a digital light processing (DLP) device, or the like to steer light from Tx module 154 such that it reflects onto different portions of a sensor array in light Rx module 156 at different times. Thus, static LIDAR system 152a can electronically scan between points 160 and 170 to capture objects in the field at area 157a, and likewise for LIDAR system 152b and area 157b.

The systems shown in FIGs. 1A and 1B are illustrative and may be modified as desired. For example, while FIGs. 1A and 1B show LIDAR systems mounted on the roof of a vehicle, those skilled in the art will appreciate that static or scanning LIDAR systems can be mounted on other parts of the vehicle in addition to or instead of the roof. For instance, static or scanning LIDAR systems can be mounted at the outer regions of a vehicle, e.g., near the front and back fenders. One vehicle may carry a combination of static and scanning LIDAR systems, e.g., a scanning LIDAR system on the roof and static LIDAR systems near the front and back fenders.

Further, automotive implementations for the LIDAR systems are chosen herein merely for the sake of illustration, and systems as described herein may be employed in other types of vehicles, e.g., boats, aircraft, trains, etc., as well as in a variety of other applications where 3D depth images are useful, such as any of the applications mentioned above. It should also be understood that static and scanning LIDAR systems can be used together and that some LIDAR systems may be configured for selectable operation in static or scanning mode.

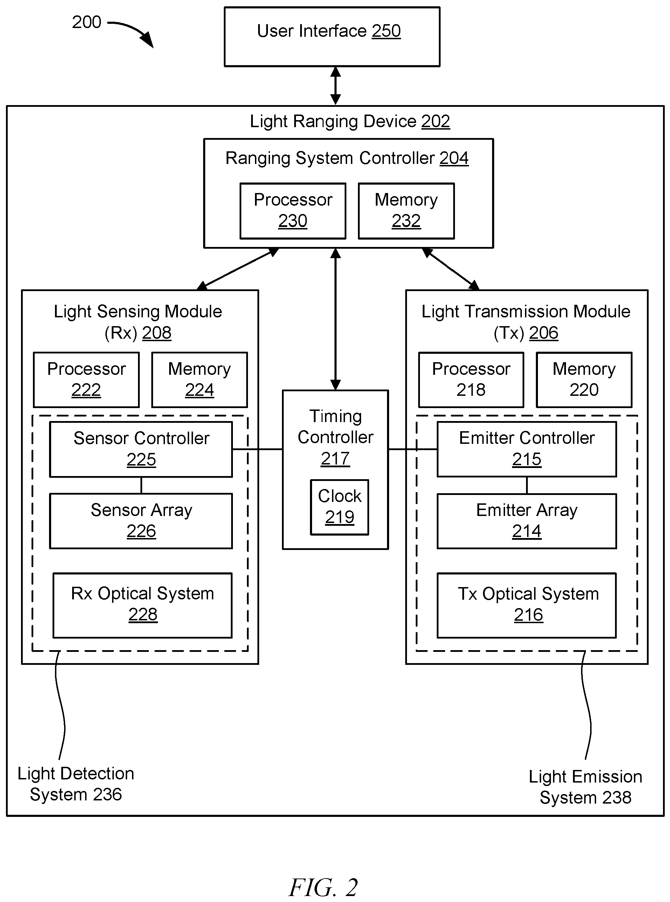

FIG. 2 illustrates a block diagram of an exemplary LIDAR system 200 according to some embodiments. LIDAR system 200 can implement a scanning LIDAR system such as LIDAR system 100 of FIG. 1A or a static LIDAR system such as LIDAR system 152a or 152b of FIG. 1B.

LIDAR system 200 can include a light ranging device 202 and a user interface 250. Light ranging device 202 can include a ranging system controller 204, a light transmission module 206 and a light sensing module 208. Ranging data can be generated by light ranging device 202 by transmitting one or more light pulses from light transmission module 206 into a field of view external to light ranging/imaging device 202. The field of view may include one or more light-reflecting objects at variable distances from light transmission module 206 and light sensing module 208. Reflected portions of the transmitted light are detected by light sensing module 208 after some delay time. Based on the delay time, the distance to the reflecting surface can be determined. In some embodiments, the delay time and distance to the reflecting surface can be determined using histogramming techniques as described below. Other ranging methods can be employed as well, e.g. continuous wave, photodemodulation, Doppler, and the like.

Light transmission (Tx) module 206 (which can correspond, e.g., to light Tx module 102 of FIG. 1A or light Tx module 152a or 152b of FIG. 1B) includes an emitter array 214, which can be a one-dimensional or two-dimensional array of light emitters (e.g., infrared lasers), and a Tx optical system 216, which when taken together with emitter array 214 can form a light emission system 238; an example implementation of light emission system 238 is described below. Light Tx module 206 can further include an optional processor 218 and memory 220, although in some embodiments these computing resources can be incorporated into ranging system controller 204. In some embodiments, memory 220 (or memory 232 of ranging system controller 204) can store information indicating when a light pulse should be transmitted and/or program code executable by processor 218 (or processor 230 of ranging system controller 204) to determine when a light pulse should be transmitted. Specific examples for determining when a light pulse should be transmitted are described below.

Light sensing (Rx) module 208 (which can correspond, e.g., to light Rx module 104 of FIG. 1A or light Rx module 154a or 154b of FIG. 1B) can include a sensor array 226, which can include photosensors capable of detecting reflected portions of transmitted light from light transmission module 206, and an Rx optical system 228, which when taken together with sensor array 226 an form a light detection system 236; an example implementation of light detecting system 236 is described below. Light Rx module 208 can further include a processor 222 and memory 224. (In an alternative implementation, these computing resources can be incorporated into ranging system controller 204.)

In some embodiments, light ranging device 202 can be operated in an electronic scanning mode, in which a LIDAR image of a scene is captured by activating only a subset of emitters at a time and by reading out only a corresponding subset of LIDAR sensor channels synchronously with the firing of the emitters. Different subsets of emitters can be activated at different times with corresponding subsets of LIDAR channels being read out synchronously with emitter activation; all emitters can be eventually activated and all the LIDAR channels in the sensor array can be read out through one shot. As an example, an emitter array can emit light by activating one column at a time and in sequential order from left to right for each emission cycle while the sensor array can be configured to read out the corresponding LIDAR channels in a corresponding sequence. Alternatively, all emitters and all sensors can be activated at once.

Some embodiments of light ranging device 202 can include one or more components to synchronize the emitting and sensing of light, including support for electronic scanning. In some embodiments, light detection system 236 can include a sensor controller 225 coupled to sensor array 226 and configured to control the operation of sensor array 226. Sensor controller 225 can be any suitable component or group of components capable of selecting one or more photosensors to sense light, such as an ASIC, microcontroller, FPGA, or any other suitable processor coupled to a selecting circuit, e.g., a multiplexer. Likewise, light emission system 238 can include an emitter controller 215 coupled to emitter array 214 and configured to control the operation of emitter array 214. Emitter controller 215 can also be any suitable processor mentioned above for sensor controller 225 and can include one or more driving components for operating emitter array 214.

In some embodiments, sensor controller 225 and emitter controller 215 are synchronized such that light emissions in emitter array 214 are synchronized with reading out of photosensors in sensor array 226. As an example, both sensor controller 225 and emitter controller 215 can be coupled to a timing controller 217 so that both controllers can operate based on the same timing scheme. Timing controller 217 can include a clock circuit 219 that generates a clock signal that oscillates between a high and low state at a certain speed for coordinating actions of digital circuits; examples of clock circuits are well-known in the art. Various time periods described below can be defined with reference to the clock signal, and timing controller 217 can provide the clock signal to emitter controller 215 and sensor controller 225. In some embodiments, timing controller 217 can also include control logic (such as an ASIC, microcontroller, FPGA, or any other suitable processor) to generate additional timing control signals to emitter controller 215 and sensor controller 225. For example, timing controller 217 can be configured to generate trigger pulse signals indicating when emitter controller 215 should begin activating emitters in emitter array 214 and sensor pulse signals indicating when sensor controller 225 should begin and end collecting data from sensor array 226. In some embodiments, the trigger pulse signal and the sensor pulse signal can be the same signal, or the trigger pulse signal and sensor pulse signal can be offset from each other by a fixed amount of time. In addition, as described below, timing controller 217 can introduce jitter between successive shots by varying the interval between generating trigger pulses. In some embodiments, sensor controller 225, emitter controller 215, and timing controller 217 can all be fabricated in the same integrated circuit device, and emitter array 214 and sensor array 216 can also be fabricated in the same device, providing a compact LIDAR array.

In some embodiments, instead of, or in addition to, sensor controller 225 and emitter controller 215, ranging system controller 204 can be configured to synchronize the operation of light sensing module 208 and light transmission module 206 such that light emissions by emitters in emitter array 214 are synchronized with reading out of photosensors in sensor array 226. For instance, ranging controller 204 can instruct emitter array 214 of light transmission module 206 to emit light (from one or more emitters at any given time) and correspondingly instruct sensor array 226 in light sensing module 208 to sense light (using one or more photodetector channels). In such embodiments, ranging/imaging system controller 204 can have its own clock signal on which it bases its instructions to light sensing module 208 and light transmission module 206.

Either of the above or other synchronization techniques can be used to implement an electronic scanning mode of operation in which different subsets of emitters in emitter array 214 are triggered at different times and different subsets of photosensors in sensor array 226 are triggered at times synchronous with the triggering of particular emitters. It is to be appreciated that other forms of sequencing for light emission and detection are envisioned and that electronic scanning is not required.

In some embodiments, processor 222 and memory 224 of light sensing module 208 can perform signal processing operations. As an example of signal processing, for each photosensor or grouping of photosensors, memory 224 can accumulate counts of detected photons (or other light intensity measurement) over successive time bins and these time bins taken together can be used to recreate a time series of the reflected light pulse (e.g., a count of photons vs. time). This time-series of aggregated photon counts (or other measures of light intensity) is referred to herein as an intensity histogram (or just histogram). In addition, processor 222 can apply certain signal processing techniques, such as matched filtering, to help recover a photon time series that is less susceptible to pulse shape distortion that can occur due to saturation and quenching of photodiodes. In some embodiments, processor 222 can apply signal processing techniques, e.g., calibration-based corrections to reduce noise and/or to compensate for channel-to-channel variation in intensity measurements.

In some embodiments, output from processor 222 of light sensing module 208 is sent to ranging system controller 204 for further processing. Ranging system controller 204 can be realized in multiple ways including, e.g., by using a programmable logic device such an FPGA, as an ASIC or part of an ASIC, using a processor 230 with a memory 232, or some combination of the above. Ranging system controller 204 can control light sensing module 208 by sending commands that include commands to start and stop light detection and commands to adjust photodetector parameters. Similarly, ranging/imaging system controller 204 can control light transmission module 206 by sending commands that include commands to start and stop light emission controls and commands to adjust other light-emitter parameters such as emitter temperature control (for wavelength tuning), emitter drive power and/or voltage. In some embodiments, one or more components of ranging system controller 204 can also be integrated into the same ASIC as sensor array 226, processor 222 and memory 224, thereby eliminating the need for a physically separate ranging controller module.

If emitter array 214 has multiple independent drive circuits, then there can be multiple on/off signals that can be properly sequenced, e.g., by ranging system controller 204. Likewise, if the emitter array includes multiple temperature control circuits to tune different emitters in the array differently, the transmitter parameters can include multiple temperature control signals. In some embodiments, ranging system controller 204 has one or more wired interfaces or connectors (e.g., traces on a circuit board) for exchanging data with light sensing module 208 and with light transmission module 206. In other embodiments, ranging system controller 204 communicates with light sensing module 208 and light transmission module 206 over a wireless interconnect such as an optical communication link.

User interface 250 can include hardware and software components, e.g., a computer system with a monitor, keyboard, mouse, CPU and memory; a touch-screen mounted in a console (e.g., on an automobile dashboard); a handheld device with a touch-screen; or any other appropriate user interface devices. Components of user interface 250 can be local to the object on which LIDAR system 200 is mounted but can also be in a different physical system that operates LIDAR system 200 remotely. For example, commands and data to/from LIDAR system 200 can be routed through a cellular network (LTE, etc.), a personal area network (Bluetooth, Zigbee, etc.), a local area network (Wi-Fi, IR, etc.), or a wide area network such as the Internet.

User interface 250 can present LIDAR data from light ranging device 202 to the user and/or allow a user or an upper level program to control light ranging device 202 with one or more commands. Example commands can include commands that activate or deactivate light ranging device 202; specify photo-detector exposure level, bias, sampling duration and other operational parameters (e.g., for emitted pulse patterns and signal processing); specify light emitters parameters such as brightness; and so on. In addition, commands can allow the user or an upper level program to select the method for displaying or interpreting results. The user interface can display LIDAR system results which can include, e.g., a single frame snapshot image, a constantly updated video image, and/or a display of other measurements for some or all pixels or sensor channels. Examples of other measurements for a pixel or sensor channel include ambient noise intensity, return signal intensity, calibrated target reflectivity, target classification (hard target, diffuse target, retroreflective target), range, signal to noise ratio, target radial velocity, return signal temporal pulse width, and the like. In some embodiments, user interface 250 can provide and track information indicating distances (proximity) of objects from the vehicle. Such information can be used, for example, to identify and track objects in the field of view and potentially provide alerts to a user or to perform any other operations that leverage ranging data, including but not limited to autonomous vehicle control.

In some embodiments, light ranging device 202 can communicate with other systems or devices. For instance, in some automotive applications, light ranging device 202 can communicate with an automated vehicle control unit (not shown), which can modify one or more parameters associated with control of the vehicle based on data received from light ranging device 202. For example, in a fully autonomous vehicle, light ranging device 202 can provide a real time depth image of the environment surrounding the car to aid in navigation. In other automotive applications, light ranging device 202 can be employed as part of an advanced driver-assistance system (ADAS) or as part of a safety system that, for example, can provide depth image data to any number of different systems (e.g., adaptive cruise control, automatic parking, driver drowsiness monitoring, blind spot monitoring, collision avoidance systems, etc.). When a vehicle control unit is communicably coupled to light ranging device 202, alerts can be provided to a driver or the proximity of an object can be tracked and/or displayed.

Light ranging system 200 can also include other components, not shown in FIG. 2. For example, in some implementations of a scanning LIDAR system (e.g., scanning LIDAR system 100 of FIG. 1A), light ranging system 200 can include appropriate hardware components to rotate a housing that contains emitter array 214 and sensor array 226, such as a rotary actuator, electric motor, magnetic motor, rotary encoder, and so on, together with control logic implemented in programmable and/or fixed-function logic circuitry. In other scanning implementations, light ranging system 200 can include light-steering components such as MEMS mirrors and appropriate control logic to support electronic scanning.

In some embodiments, light ranging device 202 can implement a rotating ranging system that can rotate continuously (e.g., at a rate of 10-30 Hz) and can determine, based on the current rotational angle when to start and stop data collection. For example, light ranging device 202 can track the angular position of sensor array 226 (e.g., using a rotary encoder) and can define a set of *M* "measurement angles" *ϕᵢ* (for *i* =1, 2, ... *M*) corresponding to uniformly spaced angular positions. Sensor array 226 can rotate (along with other components of ranging device 202) continuously at a uniform angular speed, and sensor channels can continuously generate signals. Memory 224 can accumulate counts of detected photons over successive time bins, which can be used to create an intensity histogram as described below. A controller (e.g., rangingsystem controller 204) can receive a signal indicating when the encoder position corresponds to one of the measurement angles *ϕᵢ*. This signal, also referred to as a "marker" signal, can mark a boundary between consecutive measurement periods for the sensor channels. In response to this signal, histogram data collected in memory 224 can be sent to a digital signal processor (DSP) (e.g., processor 222 or processor 230) for analysis, which can include, e.g., applying filters to the histogram data to determine the precise time of receipt of reflected LIDAR pulses. In response to the same signal, memory 224 can begin accumulating data for the next histogram. In some embodiments, memory 224 can include two (or more) banks dedicated to storing photon-counts, and photon-count data from alternate measurement periods can be stored in alternate banks. It should also be understood that continuous rotation is not required. In some implementations, a rotating ranging system can rotate and collect data in a stepwise fashion, e.g., rotating to a first measurement angle, collecting data for a measurement period, then rotating to the next measurement angle and repeating the data collection. Further, as noted above, a LIDAR system can be a static system that operates without rotating parts, and measurement periods can be initiated with any desired timing.

It will be appreciated that LIDAR system 200 is illustrative and that variations and modifications are possible. For instance, although specific processors, controllers, and memories are shown associated with different modules within LIDAR system 200, some embodiments may provide a different arrangement, e.g., with one processor and memory providing operational control and support for both the light transmission module and the light sensing module. All processors can be implemented using conventional digital logic circuits or the like, including microprocessors, microcontrollers, FPGAs, ASICs, and so on. All memories can be implemented using conventional semiconductor-based memory circuits such as SRAM, DRAM, flash RAM, and so on. Other implementations are also possible.

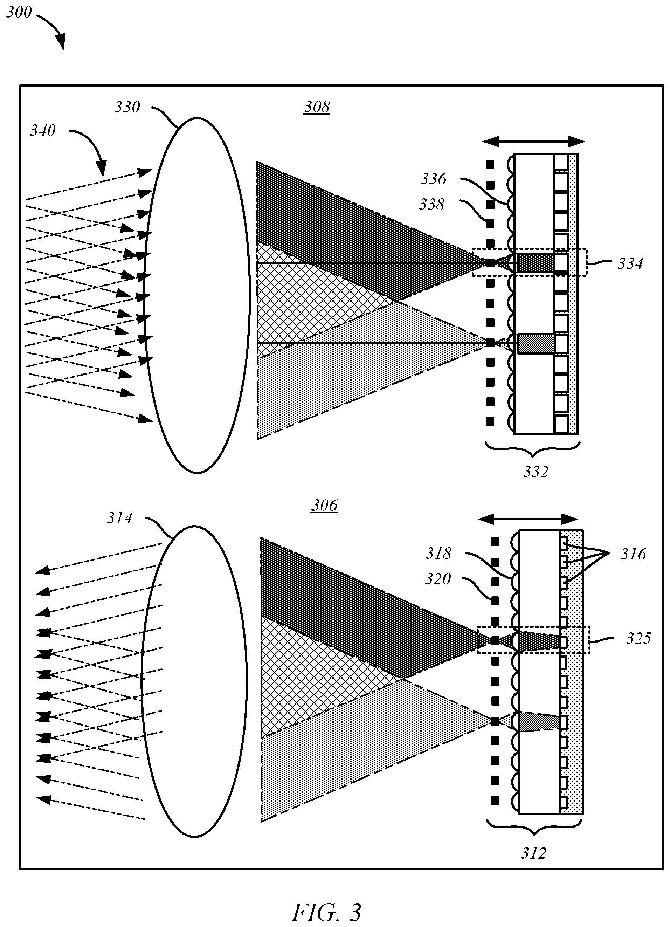

FIG. 3 shows a simplified side view of components of a light ranging device 300 according to an embodiment of the present invention. Light ranging device 300 can be an implementation of light ranging device 202 of FIG. 2. Light ranging device 300 includes a light transmission (Tx) module 306 (e.g., implementing light transmission module 206) and a light sensing (Rx) module 308 (e.g., implementing light sensing module 208).

As shown in FIG. 3, Tx module 306 can include a Tx-side micro-optics package 312 and a bulk optical element 314. Tx-side micro-optics package 312 includes a number of light emitters 316 (e.g., implementing emitter array 214 of FIG. 2) and optionally includes a micro-lens layer 318 and an aperture layer 320. Emitters 316 can be arranged in a one or two-dimensional array of transmitter channels, e.g., channel 325 shown in the boxed region. Each one of the transmitter channels has one or more light emitters 316, e.g., near-infrared (NIR) vertical cavity semiconductor lasers (VCSELs) or the like, capable of emitting narrowband light, and optionally, a micro-lens from lens layer 318 and an aperture from aperture layer 320.

Rx module 308 can include an Rx-side bulk imaging optics module 330 and an Rx-side sensor package 332. Rx-side sensor package 332 includes a number of light-sensing channels 334 (e.g., implementing sensor array 226 of FIG. 2) and optionally includes a micro-lens layer 336 and an aperture layer 338. Light-sensing channels 334 can be arranged in a one or two-dimensional array, which can match the arrangement of Tx-side micro-optics package 312, with a light-sensing channel 334 corresponding to each micro-optic transmitter channel 325. Each light-sensing channel 334 can include collimating optics, diffusers, and the like as desired, as well as a narrow bandpass filter to selectively pass normally incident photons having the wavelength emitted by the corresponding emitter 316. Each light-sensing channel can also include a set of one or more photosensors arranged to receive photons that pass through the narrow bandpass filter. Each photosensor can be a photosensor capable of detecting photons with a detector active area made of, e.g., one or more standard photodiodes, avalanche photodiodes (APDs), single-photon avalanche diodes (SPADs), RCPs (Resonant Cavity Photodiodes), optical nanoantennas, microbolometers, or other suitable photodetectors. It should be understood that a single light-sensing channel 334 can include multiple photosensitive areas (e.g., multiple SPADs) cooperating together to act as a single sensor, often with higher dynamic range, faster response time, or other beneficial properties as compared to a single large photon detection area. Other structures can also be provided to improve detection efficiency and reduce cross talk with neighboring sensor channels.

In operation, Tx module 306 can provide active illumination of objects in the area around LIDAR system 300 by transmitting pulses of, e.g., NIR light having a spectral width of, e.g., 10nm, 2nm, 1nm, 0.5nm, 0.25 nm or less, into one or more fields of view. Light emitted from one of emitters 316 diverges as it approaches one of the micro-optics of Tx-side micro-optic lens layer 318. Micro-lenses in micro-lens layer 318 capture the diverging light and refocus it to a focal plane that is coincident with apertures in aperture layer 320, which can include an array of apertures that correspond in position to the array of micro-lenses and the array of emitters 316. Aperture layer 320 can reduce crosstalk in the system. After exiting the apertures, the focused light again diverges in the form of cones that then encounter Tx-side bulk imaging optics module 314. In some embodiments, the separation between micro-lens layer 318 and Tx-side bulk imaging optics module 314 is equal to the sum of their focal lengths, such that light focused at the aperture array 320 appears as collimated light at the output of Tx-side bulk imaging optics module 314 with each collimated bundle of rays exiting the Tx-side bulk imaging optics module 314 with a different chief ray angle. Accordingly, the light from each emitter is directed to a different field of view ahead of the device. In some embodiments, Tx-side bulk imaging optic 314 is telecentric on the imaging side (which is the emitter side) of the lens, i.e., the chief rays on the image side of bulk imaging optic 314 are substantially parallel to each other and normal to the image plane (which is the emitter plane) for every position on the image plane. In this configuration the emitter array can operate as a telecentric source, i.e., the optics capture substantially all light produced by the emitter array, even light that is emitted from the emitters on the outer edges of the array.

Portions of light emitted by Tx module 306 that reflect off objects in the field of view, shown as light rays 340, enter Rx-side bulk imaging optics module 330 from multiple directions. Rx-side bulk imaging optics module 330 can include a single lens or a multi-lens group that focuses light rays 340 at a plane that is coincident with Rx-side input aperture layer 338, allowing the light to enter light sensor channels 334. In some embodiments, Rx module 308 includes a light-sensing channel 334 for each emitter 316, with the field of view of each individual light-sensing channel 334 matching the field of view of its respective emitter 316.

It will be appreciated that the LIDAR systems described above are illustrative and that variations and modifications are possible. Components of LIDAR systems described with reference to different figures can be combined in the same LIDAR system. In some embodiments, a LIDAR system can have a light Tx module and a light Rx module fabricated on the same ASIC, which can also incorporate a processor and memory. However, a particular implementation is not required. A LIDAR system can have any number of channels (including just a single channel). Particular light wavelengths, timing parameters, optical elements, and so on, can be varied as desired. LIDAR systems incorporating features of the claimed invention can be used in any application where ranging data is useful.

### 1.2.Example LIDAR Operation

A LIDAR system such as LIDAR system 300 has a number of LIDAR channels, each of which includes an emitter (e.g., emitter channel 325) and a corresponding light-sensor channel (e.g., light-sensor channel 334). LIDAR system 300 (or other LIDAR systems) can be operated to determine distance to an object in the field of view based on time between emission of a light pulse from emitter channel 325 and detection of reflected light by the corresponding light-sensing channel 334. An example of operation for a single LIDAR channel will now be described; it is to be understood that each LIDAR channel can operate similarly.

In operation, emitter channel 325 can be activated from time to time to emit a pulse of light that travels into the environment in a particular direction. Some of the light can reflect off objects in the environment and be detected by photosensors in light-sensing channel 334. To support ranging applications, light-sensing channel 334 can measure the light intensity received during each of a set of short time periods (referred to as *time bins*). For example, as described above light-sensing channel 334 may include multiple SPADs, and the number of SPADs that signal a photon can be used as a proxy for light intensity. Photon-counting detectors or other types of detectors capable of measuring light intensity can also be used. The duration of a time bin can be selected as desired; in various embodiments, each time bin can be 1 ns, 2 ns, 5 ns, or the like.

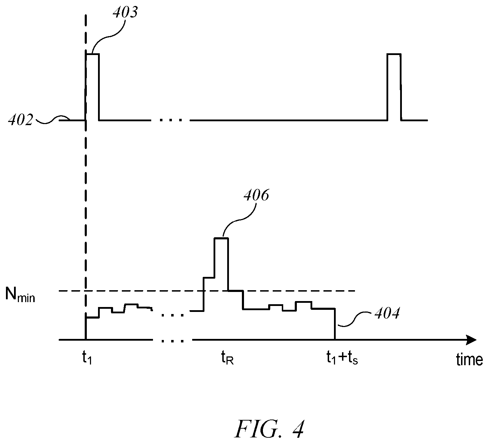

FIG. 4 shows a simplified example of operation of a LIDAR channel of LIDAR system 300 as a function of time for a single "shot." Line 402 indicates power to emitter channel 325. At time *t*₁, a pulse 403 is applied to emitter channel 325, and emitter channel 325 emits a pulse of light in response to pulse 403. Line 404 represents a histogram of photon count in light-sensing channel 334 at each time bin. Light-sensing channel 334 in this example begins sensing at time *t*₁. (In some embodiments, data collection can begin synchronously with *t*₁, e.g., simultaneously or with a small but constant offset.) Initially, noise may be detected; as used herein, "noise" can include photons of ambient light in the environment or stray light from adjacent channels of LIDAR system 300, as well as electronic noise (i.e., signals not caused by photons). Some time later, at time *t_{R},* a peak 406 is detected in the photon count. In some embodiments, peak 406 can be detected using a threshold *Nₘᵢₙ* as indicated. Time of flight can be computed as *t_{R} - t*₁, and distance to the reflective object can be defined as *c*(*t_{R}* - *t*₁)/2, where c is the speed of light. The data collection period can have a fixed duration *tₛ,* after which a next pulse can be generated.

In some embodiments, signal-to-noise discrimination can be improved by accumulating histogram 404 across multiple shots. As long as photon counts added to each bin during different shots correspond to the same fixed time relative to pulse start time *t*₁ for the shot (and provided that the total accumulation time is short relative to expected speed of motion of objects in the environment), it is expected that the time bin(s) corresponding to the signal will accumulate photons faster than time bins corresponding to noise. This can allow for a higher threshold for distinguishing signal from noise, which can improve accuracy of ranging determinations.

Other techniques for improving discrimination between signal and noise can also be used, including filtering techniques. For instance, in each shot the emitter can produce a pulse train with more than one pulse (which can have different durations), and a matched filter can be applied to the raw histogram data (either per-shot or after accumulating the histogram over a "cycle" consisting of multiple shots) to produce filtered histogram data. The filtered histogram data can be analyzed to detect patterns corresponding to the emission pattern of the pulse train. Examples of accumulation, pulse trains, matched filtering, and related techniques for improving signal-to-noise discrimination in LIDAR systems are described in commonly-owned U.S. Patent Application Pub. No. 2018/0 259 645. It is to be understood that any of these and other techniques may be applied in LIDAR systems that implement per-shot jitter as described below.

### 2. Crosstalk from External Pulsing Source

It should be understood that a LIDAR sensor channel (e.g., any of the sensor channels described above) can be designed to detect photons and/or otherwise measure light intensity within a particular (typically narrow) frequency band. Such a LIDAR sensor channel may not be able to distinguish light originating from the LIDAR emitter from light originating from some other source that coincidentally produces light of the same wavelength as the LIDAR emitter. "Crosstalk" is used herein to refer to light sensed by a LIDAR sensor channel that originates from some source other than the LIDAR emitter (or LIDAR emitter array) with which the LIDAR sensor channel is operatively coupled. Certain embodiments of the present invention relate to techniques for identifying, reducing, and/or eliminating such crosstalk.

In this section, it is assumed that a LIDAR system such as LIDAR system 300 operates in an "accumulating" mode in which light intensity data (e.g., photon counts in a particular light-sensing channel) is accumulated across multiple shots (e.g., as described above), and that a source of crosstalk is emitting pulses at regular intervals that may accumulate to form a crosstalk peak in a histogram that may be misidentified as a signal. Examples of techniques usable to reduce the effect of this type of crosstalk will now be described. Although the examples are described with reference to LIDAR system 300 or LIDAR system 200, it should be understood that the same techniques can be applied to any LIDAR system in which light intensity data corresponding to multiple shots is accumulated (e.g., in a histogram) as described above.

### 2.1.Crosstalk Peaks

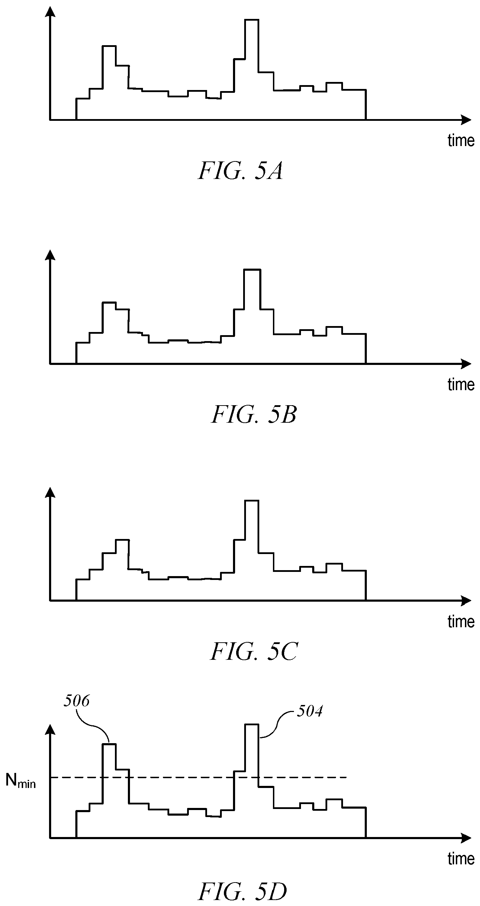

Shots can occur at regular intervals. However, in some instances, LIDAR system 300 may be operating in the field of view of another LIDAR system, and light-sensing channel 334 may sense light from the other LIDAR system. If the emitters in both LIDAR systems are operating at the same shot frequency, this can result in crosstalk between LIDAR systems. By way of illustration, FIGs. 5A-5D show an example of accumulating a histogram of photon counts per time bin in the presence of inter-system crosstalk. FIGs. 5A-5C show representative histograms from three different shots, and FIG. 5D shows a result of accumulating histograms for a set of shots including FIGs. 5A-5C. In FIG. 5D, two distinct peaks 504 and 506 each exceed the threshold *Nₘᵢₙ.* In this case, peak 504 is the "true" peak corresponding to reflected light from emitter 316, while peak 506 is a "crosstalk" peak corresponding to light from an external pulsed light source. However, LIDAR system 300 may not be able to distinguish true peak 504 from crosstalk peak 506. For instance, while this example shows true peak 504 having a higher maximum photon count than crosstalk peak 506, this is not always the case.

### 2.2.Per-Shot Jitter to Reduce Crosstalk

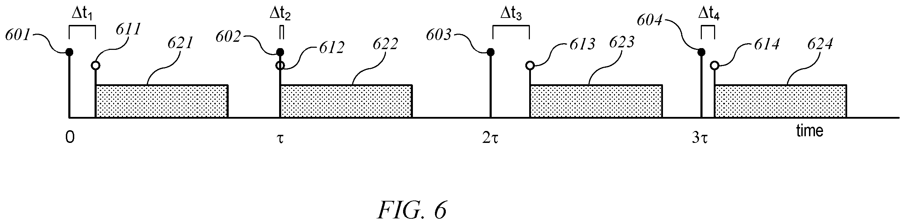

Certain embodiments can reduce this type of crosstalk by introducing a quasi-random variation, referred to herein as *per-shot jitter* (or just *jitter*), in the timing of successive pulses of emitter 316. FIG. 6 illustrates per-shot jitter according to an embodiment of the present invention. FIG. 6 is a timeline view. Shots begin at regular intervals (times 0, τ, 2τ, 3τ, etc.) as indicated by event markers 601, 602, 603, 604. However, within each shot (i) the trigger pulse to emitter 316, indicated by event markers 611, 612, 613, 614, is delayed by a shot-specific jitter (time Δ*tᵢ*) after the "begin" time of the shot. (Note that in this example, Δ*t₂* happens to be zero.) The data collection period for each shot, indicated by shaded rectangles 621, 622, 623, 624, is synchronous with the trigger pulse for that shot and of constant duration (e.g., *tₛ* as defined above with reference to FIG. 4).

The jitter for each shot can be selected using various techniques; specific examples are described below. The shot-specific jitter can be longer than a histogram time bin and can be, e.g., up to 20% of the total duration of the data collection phase of the shot, or larger as desired. Different shots preferably have different shot-specific jitter so that the trigger pulses do not occur at regular intervals.

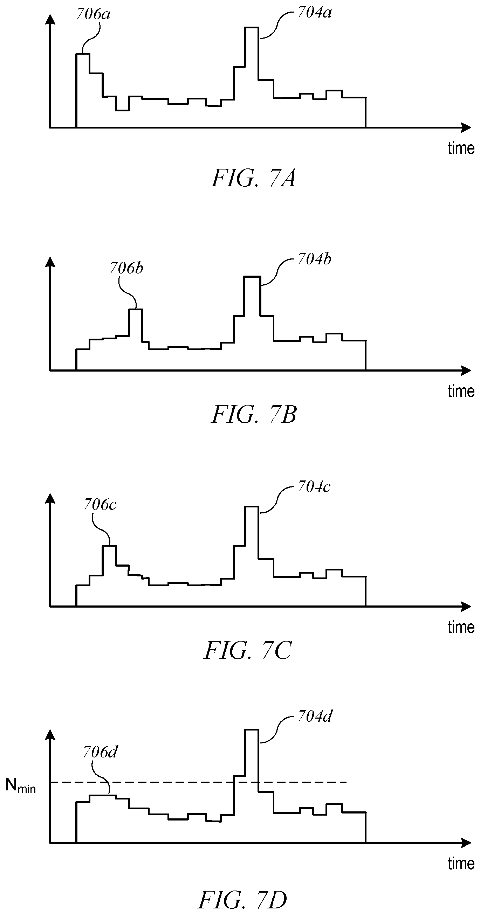

Light-sensing channel 334 begins to record data synchronously with the trigger pulse during each shot (not with the beginning of the shot) so that, in a histogram accumulated across multiple shots, photon counts due to reflected light from an object at a constant distance from LIDAR system 300 accumulate in the same time bin. As long as any crosstalk light source is not operating with the same shot-specific jitter, different shots will have photon counts due to crosstalk that accumulate in different time bins. Accordingly, crosstalk peaks can be "spread" across multiple bins of the histogram. FIGs. 7A-7D show an example of accumulating a histogram of photon counts per time bin with per-shot jitter according to an embodiment of the present invention. FIGs. 7A-7C show representative histograms from three different shots, and FIG. 7D shows a result of accumulating histograms for a set of shots including FIGs. 7A-7C. In FIGs. 7A-7C, crosstalk peaks 706a-c occur at different times relative to the beginning of data collection for the shot while true peaks 704a-c occur at the same time relative to the beginning of data collection for the shot. As a result, in the accumulated histogram shown in FIG. 7D, crosstalk peak 706d is spread across a number of time bins while true peak 704d is not similarly spread. Thus, an appropriate threshold *Nₘᵢₙ* can reliably distinguish true peak 704d from crosstalk peak 706d.

The per-shot jitter for each shot can be selected as desired, and the jitter can be as long as desired. To spread crosstalk peaks effectively, the jitter selected for different shots within a cycle can vary by an amount large enough to span several time bins. For example, in some embodiments each shot has a data collection period (i.e., time between the trigger pulse and the last time bin of the histogram) of 1 µs, and jitter time for each shot can be selected in a range from 0 to 200 ns (20%. The shot interval (i.e., the time τ from the beginning of one shot to the beginning of the next shot as shown in FIG. 6) can be long enough to allow for jitter so that the next shot does not begin before the end of the data collection period for the previous shot. For instance, if the data collection period is 1 µs and jitter is up to 200 ns, the shot interval τ can be 1.2 µs (or longer).

In some embodiments, the per-shot jitter Δ*tᵢ* can be selected randomly; however, random selection can be "clumpy" (e.g., the same value may be selected for multiple consecutive shots), and this can reduce the desired spreading effect. Accordingly, some embodiments use an equal energy sampling technique or other technique that is not purely random to avoid "clumpy" sequences of per-shot jitter. For example, if a histogram is accumulated across 20 shots and there are ten possible values for the jitter, then each possible jitter value should be selected twice; more generally, if a histogram is accumulated across *M* shots and there are *J* possible values for the jitter, then each possible jitter value should be selected *M*/*J* times (subject to rounding if *M*/*J* is not an integer). A random or pseudorandom selection technique subject to this constraint can be used.

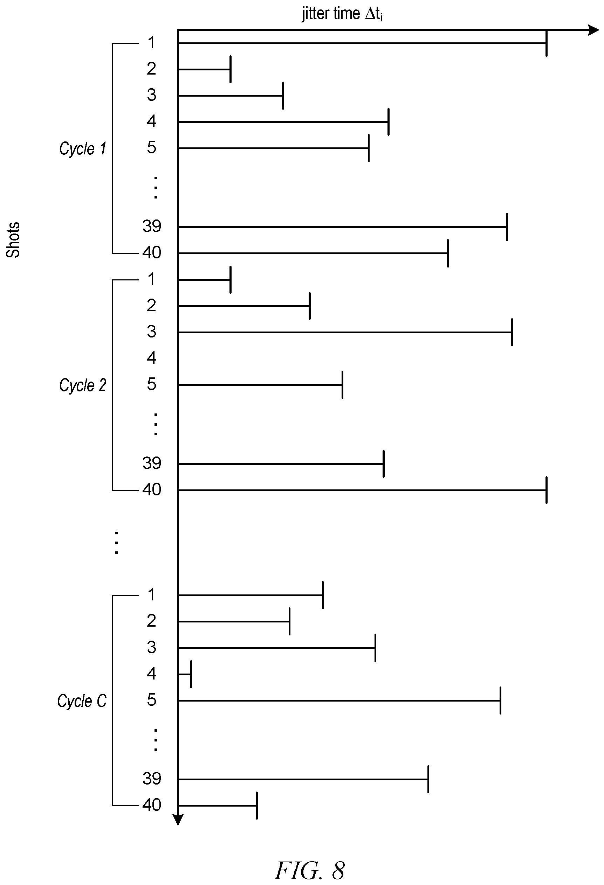

In some embodiments, a "master" jitter sequence can be predefined (e.g., by loading a sequence of jitter-time values into device firmware). FIG. 8 shows a graphical representation of an example master jitter sequence according to an embodiment of the present invention. The vertical axis corresponds to shot number, and the horizontal axis corresponds to a per-shot jitter Δ*tᵢ* assigned to the shot number. In some embodiments, the per-shot jitter Δ*tᵢ* can be expressed as a specific amount of time (e.g., in a range from 0 ns to 200 ns or from 0 µs to 1.2 µs). In other embodiments, the per-shot jitter Δ*tᵢ* can be expressed as a fraction or percentage of the data collection period (e.g., 0 to 0.2 or 0 to 1.2), which allows the same master jitter sequence to be used in systems where the length of the data collection period and/or the shot interval are adjustable parameters.

In this example, it is assumed that histograms are accumulated over a "cycle" of 40 shots. Within a cycle, a sequence of jitter values to be used for each shot is created using equal-energy sampling. For instance, jitter values can be assigned in the range from 0 to 200 ns in increments of the width of one time bin or a multiple thereof (e.g., 1 ns, 2 ns, 5 ns, or the like). Different sequences of jitter values can be assigned to different cycles; for instance, Cycle 1 and Cycle 2 in FIG. 8 have different jitter sequences. Jitter sequences for any number C of cycles can be defined (e.g., several hundred cycles). In some embodiments, the jitter sequences for different cycles can be different permutations of the same set of possible jitter values. Jitter sequences can be generated in advance of operation (e.g., as part of device firmware) and stored in memory of LIDAR system 200, e.g., as a jitter array indexed by cycle number and shot number within a cycle. In some embodiments, all instances of LIDAR system 200 have the same content in their respective jitter arrays. At start up, LIDAR system 200 can randomly (or pseudorandomly) select a starting cycle number and use the corresponding jitter sequence, then increment the cycle number to select a different jitter sequence for the next cycle. Once the end of the master jitter sequence is reached, LIDAR system 200 can loop back to the beginning. This makes it unlikely that two different instances of LIDAR system 200 that happen to be in proximity to each other would also happen to be at the same point in the master jitter sequence at the same time. As long as the two instances of LIDAR system 200 are applying different jitter values at any given time, crosstalk between them is unlikely to create spurious signal peaks in either system.

In some embodiments, a master jitter sequence can be generated for a large number of cycles (e.g., as described above), then truncated (e.g., by leaving off one shot of the last cycle) so that the length of the master jitter sequence is not an integer multiple of the number of shots per cycle. In this case, LIDAR system 200 can randomly (or pseudorandomly) select any individual entry in the master jitter sequence as a starting point and begin incrementing through the sequence from that point, looping whenever the end is reached. This can further reduce the probability that two different instances of LIDAR system 200 that happen to be in proximity to each other would also happen to be at the same point in the master jitter sequence at the same time, making crosstalk between them even more unlikely to create spurious signal peaks in either system.

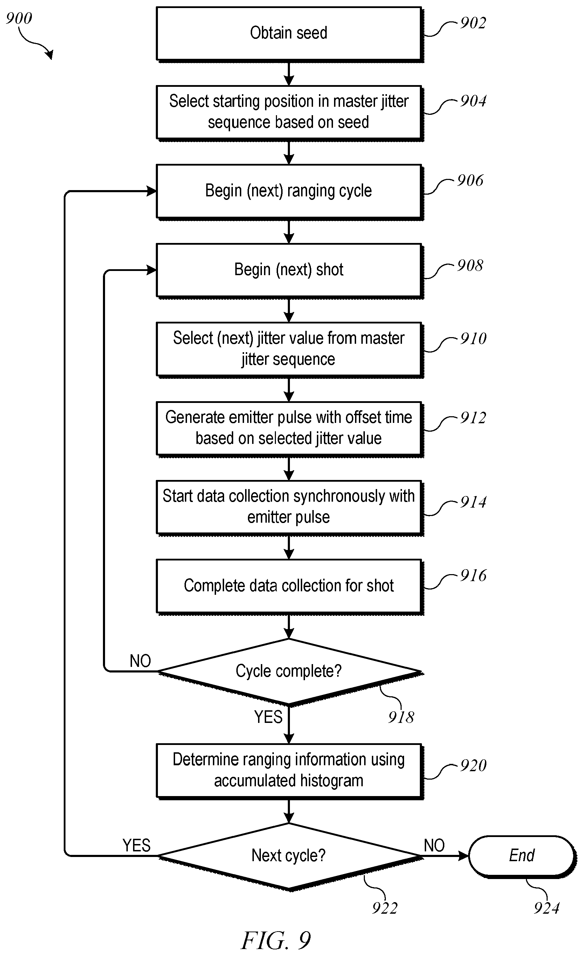

To further illustrate use of a master jitter sequence, FIG. 9 is a flow diagram of a process 900 for operating a LIDAR channel according to an embodiment of the present invention. Process 900 can be implemented, e.g., in LIDAR system 200 of FIG. 2 using timing controller 217 and/or processor 230.

Process 900 can begin when LIDAR system 200 is initialized to begin performing ranging operations. For instance, process 900 can begin during system startup of LIDAR system 200 (e.g., in response to power-up of the system) or in response to a user input command to begin ranging operations. At block 902, process 900 can obtain a seed. The seed can be obtained in various ways. For instance, a seed can be generated based on the system clock using techniques known in the art. Other techniques can also be used. It is assumed that a different seed can be obtained every time process 900 begins, although this is not required. At block 904, process 900 can select a starting position in a master jitter sequence (e.g., a sequence as described above with reference to FIG. 8) based on the seed. For example, the master jitter sequence can be stored as an array in memory 232 (or in memory of timing controller 217), and the seed can be used to select a location in the array.

At block 906, a ranging cycle begins. As described above, a ranging cycle can include a fixed number of shots (e.g., 20 shots, 40 shots, or some other number of shots), and at block 908, a shot within a ranging cycle can begin.

At block 910, process 900 selects the next jitter value from the master jitter sequence. For the first shot, the selected jitter value can be the jitter value corresponding to the starting position selected at block 904. At block 912, process 900 generates a trigger pulse (for at least one emitter channel) with an offset time based on the selected jitter value. At block 914, process 900 starts data collection by the light-sensing channel synchronously with the trigger pulse to the corresponding emitter channel. It should be understood that data collection need not start simultaneously with the trigger pulse, as long as any offset between the time of the trigger pulse and the time of starting data collection is kept constant (within one time bin). Data collection for a shot can include generating or incrementing a histogram of photon count per time bin or the like. At block 916, process 900 can wait for data collection for the shot to be completed. The duration of waiting depends on the length of the data collection period *tₛ,* which in turn may depend on the maximum range of the particular LIDAR system.

At block 918, process 900 determines whether the cycle is complete. As noted above, each ranging cycle can include a fixed number of shots, and a counter or similar structure may be used to determine whether the fixed number of shots have been completed. If not, then process 900 returns to block 908 to begin the next shot. For the next shot, at block 910 process 900 can step to the next position in the master jitter sequence and select the corresponding jitter value; upon reaching the end of the master jitter sequence, process 900 can loop back to the beginning of the master jitter sequence.

Upon completion of the cycle at block 918, process 900 can proceed to block 920 to determine ranging information (e.g., distance to an object in the environment) using the accumulated histogram. Ranging information and/or other information, e.g., some or all of the raw photon counts in the histogram, information characterizing the peak (e.g., height and/or width) can be provided to a downstream device or system, such as a rendering engine that renders graphical images based on ranging information and/or other information provided by a LIDAR system, a data collection and storage system, a user interface that displays data, or an automated control system that operates in response to ranging information At block 922, process 900 can initiate a new cycle by returning to block 906. Initiating a new cycle may include resetting all histogram data but not the position in the master jitter sequence. In this manner, process 900 can continue indefinitely. If, at any point, it is determined that no more cycles are to be initiated, process 900 can end at block 930.

It should be understood that process 900 is illustrative and that variations and modifications are possible. Operations described in a particular order can be performed in a different order or in parallel to the extent logic permits; some operations can be omitted; and other operations can be modified or combined.

For instance, in examples described above, the jitter value for a given shot is selected according to a predefined master jitter sequence. Use of a predefined master jitter sequence allows simple run-time logic to step through the sequence and select each jitter value in turn. Another implementation can allow the jitter value for a given shot to be selected in real time (or near real time), e.g., by implementing an equal-energy sampling technique that generates outputs in real time or near real time, although this may complicate the real-time control logic.

In the example described above, process 900 provides a single pulse per shot. Those skilled in the art will appreciate that process 900 can be applied in LIDAR systems where each shot includes a pulse train of one or more pulses spaced apart at prescribed intervals; jitter can be applied to the first pulse of the pulse train, and subsequent pulses in the pulse train can be generated at consistent times relative to the time of the first pulse. The use of pulse trains enables various pulse-coding schemes (e.g., Barker coding) to facilitate distinguishing pulses originating from different sources; examples of pulse trains and coding techniques are described in above-referenced U.S. Patent Application Pub. No. 2018/0259645. In some embodiments of the present invention, jitter as described above can be applied to distinguish pulses originating from sources that happen to use the same or similar pulse-coding schemes.

The particular choice of jitter values can be varied. As described above, jitter can be used to spread a crosstalk peak among multiple time bins in a histogram; accordingly, jitter should be greater than one time bin. In some embodiments, the maximum amount of jitter can be defined as any fraction of the sampling period, and in some embodiments the fraction can be greater than 1. For instance, some embodiments allow jitter of up to ten times the data collection (e.g., up to 10 µs jitter for a sampling period of 1 µs). Where the jitter exceeds the data collection period, the throughput (or rate of successive shots) can be reduced accordingly so that shots do not overlap. Further, while examples described above assign "positive" jitter offsets that delay the trigger pulse relative to the nominal beginning of the shot period, other implementations may use "negative" jitter offsets such that the trigger pulse happens earlier than the nominal beginning of the shot period, as long as data collection for one shot finishes before the first pulse of the next shot. It should be noted that jitter differs from staggering of pulses as described in above-referenced U.S. Patent Application Pub. No. 2018/0259645 in at least two respects. One is that the staggering of pulses introduces a variation between the emitter and sensor timing such that the arrival time of the reflected light from the emitter is shifted; in contrast, jitter as described herein does not change the relative emitter/sensor timing. Another is that jitter is intended to spread a crosstalk pulse across multiple histogram bins in an accumulation process, where staggering is generally restricted to time offsets less than one time bin. That said, it should be understood that both jitter and staggering can be implemented in the same LIDAR system.

Moreover, the description above refers to a single LIDAR channel having an emitter and a corresponding light-sensing channel. As described above, a LIDAR system may include an array of multiple LIDAR channels. Where this is the case, jitter can be applied to each channel in the manner described. In some embodiments, the same jitter offset is applied to all channels for a given shot. In other embodiments, the jitter offset can be selected per channel so that different channels in the same array apply different jitter offsets; for example, different channels may start at different positions in the same master jitter sequence. This option can reduce crosstalk between channels in the same LIDAR system, although it may require more complex control circuitry to trigger different emitters (and corresponding detectors) at different times in relation to each other.

### 3. Adaptive Operations to Reduce Crosstalk

In some embodiments, a LIDAR system such as LIDAR system 200 can detect the presence of possible crosstalk and can adaptively modify its own operation in a manner that may reduce the effect of crosstalk on ranging operations. Examples of detecting crosstalk and adapting system operations based on detection of crosstalk will now be described.

### 3.1.Detecting Crosstalk

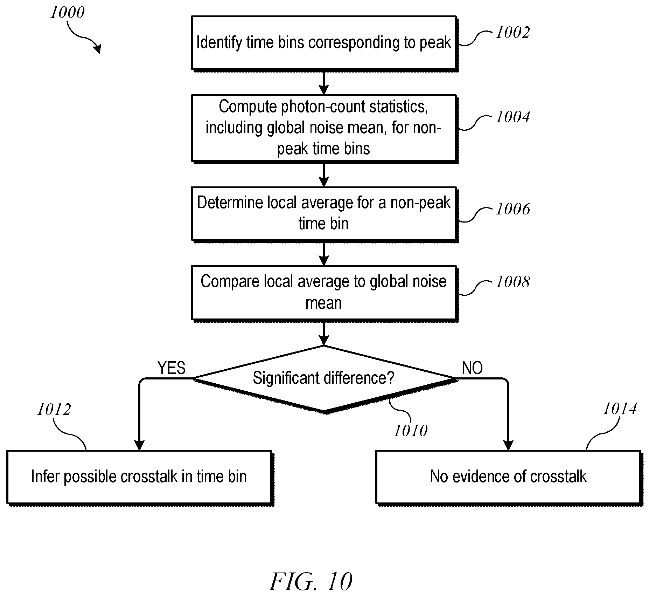

In some embodiments, a LIDAR system such as LIDAR system 200 can analyze histogram data (which can be collected with or without jitter) to infer the presence of a crosstalk source. FIG. 10 shows a flow diagram of a process 1000 that can be used in some embodiments to infer the presence of a crosstalk source from histogram data. Process 1000 can be implemented, e.g., in processor 230 of LIDAR system 200. Process 1000 can use histogram data from one or more sensor channels, which can be collected in the manner described above with reference to FIGs. 5A-5D or FIGs. 7A-7D, either with or without the use of per-shot jitter. For instance, process 900 can be used for collection of histogram data with jitter. (To collect histogram data without jitter, a process similar to process 900 can be used, omitting the operations related to selecting and applying a per-shot jitter.)

Process 1000 begins after histogram data for a cycle (or in some instances a single shot) has been collected. At block 1002, process 1000 can identify time bin(s) corresponding to the highest peak in the histogram, e.g., the peak time bin or a group of adjacent time bins for which the number of photons exceeds a threshold. This threshold can be the same threshold used for peak detection in the context of ranging operations (e.g., as described above) or a different value. The time bins identified at block 1002 may be used for ranging operations but are ignored in the rest of process 1000.

At block 1004, process 1000 can compute photon-count statistics for the "non-peak" time bins, i.e., time bins not identified as corresponding to a peak at block 1002. The statistics can include a "global" mean photon count per time bin, a standard deviation of the photon count per time bin, and/or other statistics as desired.

At block 1006, process 1000 can determine a "local" average photon count for a non-peak time bin. In some embodiments, the local average can be the photon count of a single non-peak time bin. In other embodiments, the local average can be the average photon count across a small group of consecutive time bins (e.g., 3 bins, 5 bins, or the like); if desired, the local average can be a weighted average (e.g., weighting the central bin in the group most strongly).

At block 1008, process 1000 can compare the local average photon count computed at block 1006 with the global mean photon count computed at block 1004, and at block 1010, process 1000 can determine whether the difference between the local average photon count and the global mean photon count is significant. Criteria for identifying significance can be selected as desired. For instance, a significant difference can be defined as a difference greater than one standard deviation from the global mean, greater than two standard deviations from the global mean, or greater than some other threshold (which can be defined relative to the standard deviation or other measure of natural variability in the noise). If a significant difference is found, then at block 1012, process 1000 can infer that a possible crosstalk source is present. If not, then at block 1014, process 1000 can infer that no evidence of crosstalk is present.

In some embodiments, blocks 1006-1014 can be performed separately for some or all of the non-peak time bin; local averages can overlap or not if desired. In addition, the inference of a possible crosstalk source can be based on more than one time bin having a local average photon count that is significantly different from the global mean. For instance, in some embodiments a possible crosstalk source is inferred if at least a minimum number of consecutive time bins have local average photon counts that are significantly different from the global mean. When the histogram being analyzed was collected using per-shot jitter, considering multiple time bins can enhance the likelihood of detecting smeared-out crosstalk peaks such as peak 706d in FIG. 7d.

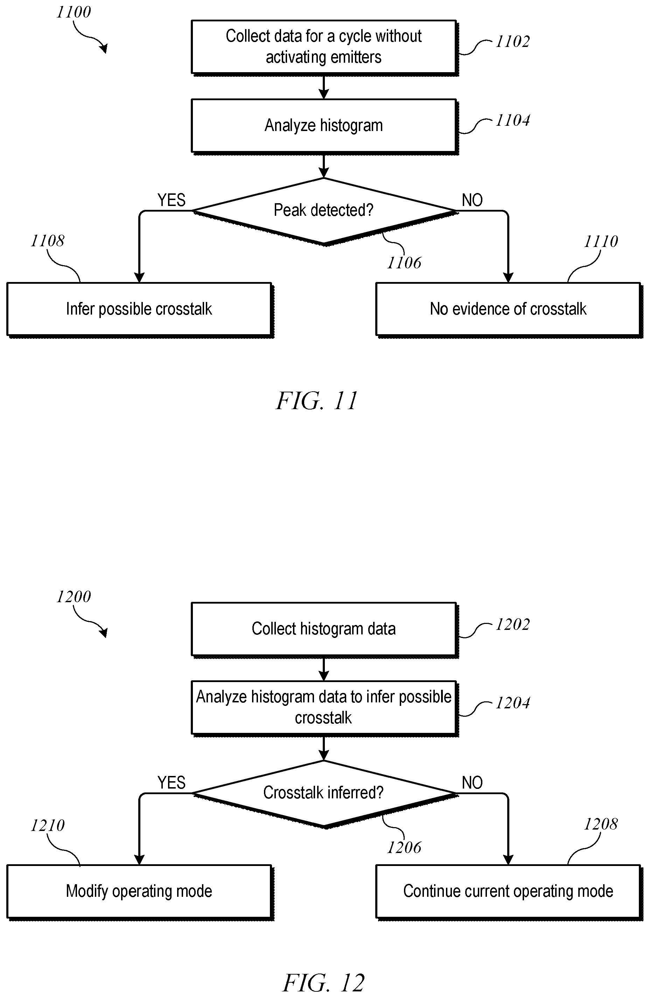

Other processes can also be used in addition to or instead of process 1000. For example, in some embodiments a LIDAR system such as LIDAR system 200 can be operated in a "background" mode in which the light detection channels are operated as usual but the emitters are not activated. FIG. 11 shows a flow diagram of a process 1100 that can be used in some embodiments to infer the presence of a crosstalk source from histogram data collected using a background mode. Process 1100 can be implemented, e.g., in processor 230 of LIDAR system 200. At block 1102, data is collected for a cycle without activating the emitters. For example, each light sensing channel can be operated to accumulate a histogram based on a sequence of shots as described above while the emitters are not activated to produce light pulses. Under these conditions, any photons detected by the light detection channels can be assumed to come from an external source (i.e., not from the emitters of the LIDAR system).

At block 1104, the histogram accumulated during block 1102 can be analyzed to determine whether any peaks are detected, e.g., using the same peak detection techniques that are used during a normal ranging operation. In some embodiments, other analyses can also be performed. For instance, techniques similar to techniques described above with reference to FIG. 10 can be used to perform a statistical analysis of the background noise and to detect significant local deviations from a global average of background noise. (Any peaks detected during the analysis can be excluded.)

At block 1106, process 1100 can determine whether a peak was detected or, in some embodiments, whether a significant local deviation from the global average of background noise was detected. If a peak (or other significant local deviation from the global average) was detected, then at block 1108 process 1100 can infer that a possible crosstalk source is present. If not, then at block 1110, process 1100 can infer no evidence of crosstalk.

It will be appreciated that processes 1000 and 1100 are illustrative and that variations and modifications are possible. Particular techniques for detecting crosstalk can be adapted to a specific LIDAR system.

### 3.2.Adaptive Response to Crosstalk Detection

In some embodiments, a LIDAR system such as LIDAR system 200 can use a process such as process 1000 or process 1100 to detect possible crosstalk and can adaptively modify its operation in response to detecting possible crosstalk. It should be understood that crosstalk can come from various types of sources. One type, sometimes referred to herein as "harmonic" crosstalk, is produced by a light source that pulses periodically with a period that is harmonic with the shot interval in the LIDAR system. The pulse period of a harmonic crosstalk source can be the same as the shot interval, a multiple of the shot interval, or a harmonic fraction of the shot interval (e.g., 1/2, 1/3, 1/4, etc.) such that light originating from multiple pulses of the harmonic crosstalk source accumulate in the same histogram bin, at least in the absence of jitter as described above. Examples of sources of harmonic crosstalk include other LIDAR systems that happen to have similar operating characteristics to the LIDAR system that experiences crosstalk (e.g., two or more LIDAR systems manufactured according to the same design). Another type of crosstalk, sometimes referred to herein as "non-harmonic" crosstalk, may be produced by a light source that emits a single strong pulse during a cycle of the LIDAR system that experiences crosstalk. Examples of sources of non-harmonic crosstalk include LIDAR systems of a different design that may emit pulses periodically with a pulse period that is uncorrelated with the shot interval of the LIDAR system that experiences crosstalk. Those skilled in the art with access to the present disclosure will appreciate that the application of shot-specific jitter (e.g., as described above with reference to FIG. 10) can reduce peaks associated with harmonic crosstalk but may not have any effect on non-harmonic crosstalk. Accordingly, other adaptations can be applied.

FIG. 12 is a flow diagram of a process 1200 for detecting crosstalk in a LIDAR system and adaptively modifying operation of the LIDAR system to reduce the effect of crosstalk according to an embodiment of the present invention. Process 1200 can be implemented, e.g., in LIDAR system 200 of FIG. 2 or other LIDAR systems including any LIDAR systems described herein.

At block 1202, the LIDAR system can collect histogram data, e.g., for a ranging cycle. In some embodiments, the LIDAR system can initially operate in a default mode with no jitter and can adaptively add or modify jitter as described below. At block 1204, the LIDAR system analyzes the histogram data to infer possible crosstalk. For example, process 1000 of FIG. 10 and/or process 1100 of FIG. 11 can be used to infer possible crosstalk. Analysis of histogram data can be performed, e.g., by processor 222 or processor 230 of LIDAR system 200.

At block 1206, it is determined whether possible crosstalk is inferred. If not, then at block 1208, the LIDAR system can continue operating in its current mode (e.g., the default mode). Process 1200 can be repeated from time to time (e.g., for every ranging cycle or at regular intervals, e.g., once every 10, 20, 50, or 100 ranging cycles or some other defined interval) as conditions may change during operation.

If, at block 1206, possible crosstalk is inferred, then at block 1210, the LIDAR system modifies its operating mode. For example, if the LIDAR system is operating without jitter, modification of the operating mode at block 1210 can include adding jitter. As another example, if the LIDAR system is operating with jitter, modification of the operating mode at block 1210 can include further measures such as increasing the range of jitter values, skipping to a new location in the master jitter sequence, or otherwise modifying the jitter properties. As yet another example, in embodiments where the LIDAR system supports coded pulses (e.g., Barker codes) modification of the operating mode at block 1210 can include changing to a different supported pulse coding scheme. In an embodiment of LIDAR system 200, processor 230 can determine the modification to be made and send appropriate commands to timing controller 217, sensor controller 225, and/or emitter controller 215.

In some embodiments, after modifying the operating mode at block 1210, process 1200 can return to block 1202 to assess the effect of the modification. If possible crosstalk is still inferred, the operating mode can be further modified until crosstalk is no longer inferred or until any inferred crosstalk has reached a sufficiently low level that crosstalk peaks are not expected to reach the signal detection threshold.

In some embodiments, a modification to the operating mode of the LIDAR system at block 1210 can be adaptively selected based on additional analysis of the inferred crosstalk. For example, crosstalk is typically strongest when the LIDAR system is pointed toward the source of the crosstalk pulses. In the case of a scanning LIDAR system, the crosstalk may depend on rotational angle of the LIDAR system; in the case of a static LIDAR system, crosstalk may be different for different portions of the array. Accordingly, in some embodiments LIDAR system 200 can use information collected from across the LIDAR array (e.g., which pixels in the field of view are exhibiting indicia of crosstalk) to infer the direction of the crosstalk source. LIDAR system 200 can modify its behavior when pointed in the direction of the crosstalk source, e.g., by increasing the emitter energy (or intensity) and the threshold for detecting a peak in a ranging operation, and/or by selectively using coded pulse trains when pointed in that direction to enhance signal detection. In embodiments where jitter is controllable per-channel (or per group of channels), LIDAR system 200 can selectively apply jitter to channels pointed in the direction of the crosstalk source.

Another technique for modifying the operating mode of the LIDAR system can include attempting to characterize the source of the crosstalk. For example, in some embodiments, the LIDAR system can perform a background cycle (e.g., as described above with reference to FIG. 11). If a peak is detected in the background cycle, LIDAR system 200 can analyze the peak to infer characteristics of the source. For example, LIDAR system 200 may have information characterizing the pulses emitted from various types of light sources, such as other LIDAR systems. Such information can include, for example, pulse coding (number and timing of pulses), pulse shape (e.g., duration, ramp-up and/or ramp-down behavior), and the like. If an observed pulse during a noise cycle matches the characteristics of a pulse from a particular type of source to a sufficient degree, LIDAR system 200 can determine that the pulse is probably from that type of source. In some embodiments, this information can be used to select a modification to perform. For instance, if the crosstalk source uses a particular pulse coding, LIDAR system 200 can select a different pulse coding. As another example, LIDAR system 200 may select a jitter scheme such that crosstalk from the particular source type is less likely to accumulate into a peak.

It will be appreciated that process 1200 is illustrative and that variations and modifications are possible. Different techniques for detecting crosstalk and adaptively modifying system properties to reduce the effect of detected crosstalk can be implemented.

### 4. Range Aliasing

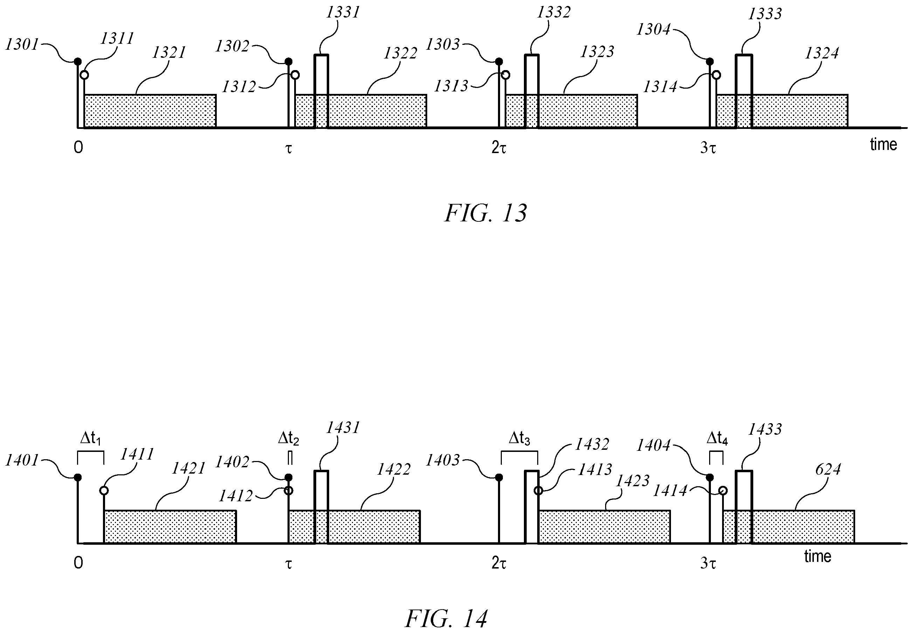

In some embodiments, jitter as described above can also be used to reduce the effects of range aliasing. As used herein, "range aliasing" occurs when a light pulse from the emitter during a first shot reflects off an object that is far enough away that the reflected light does not return to the sensor until some time during the next shot (or any subsequent shot). If the emitter emits light at regular intervals and the sensor channel is operated synchronously with the emitter, late-returning light can lead to spurious peaks in a histogram, similar to crosstalk peaks described above. These spurious peaks can lead to errors in range determination. FIG. 13 shows a simplified illustration of range aliasing that can occur in the absence of jitter. FIG. 13 is a timeline view. Shots begin at regular intervals (times 0, τ, 2τ, 3τ, etc.) as indicated by event markers 1301, 1302, 1303, and 1304. Trigger pulses (event markers 1311, 1312, 1313, 1314) occur at regular intervals relative to the beginning of each shot, i.e., per-shot jitter is not applied Data collection periods are indicated by shaded rectangles 1321, 1322, 1323, 1324. Reflected light pulse 1331 from a light pulse produced in response to the first trigger pulse (event marker 1311) arrives during the second data collection period (rectangle 1322). Similarly, reflected light pulses 1332 from light pulses produced in response to the second and third trigger pulses (event markers 1312, 1313 arrive during the third and fourth data collection periods (rectangles 1323, 1324), respectively. The arrival times of the reflected pulses 1331, 1332, 1333 are consistent relative to the beginning of the data collection period during which they arrive, and consequently a peak can be accumulated in a histogram. However, if it is assumed that the peak is responsive to the emitter pulse of the shot during which the peak was detected, ranging information will be "aliased" to a smaller time of flight than the actual time of flight.

In some embodiments of the present invention, applying per-shot jitter in the manner described above can reduce range aliasing. FIG. 14 shows a simplified illustration of removing range aliasing by applying per-shot jitter according to an embodiment of the present invention. FIG. 14 is a timeline view. Shots begin at regular intervals (times 0, τ, 2τ, 3τ, etc.) as indicated by event markers 1401, 1402, 1403, and 1404. Trigger pulses (event markers 1411, 1412, 1413, 1414) occur at varying intervals relative to the beginning of each shot, i.e., per-shot jitter is applied. Data collection periods, indicated by shaded rectangles 1421, 1422, 1423, 1424, are synchronous with the trigger pulses as in FIG. 6. Reflected light pulse 1431 from a light pulse produced in response to the first trigger pulse (event marker 1411) arrives during the second data collection period (rectangle 1422). Reflected light pulse 1432 from a light pulse produced in response to the second trigger pulse (event marker 1412) arrives just prior to the third data collection period (rectangle 1323), and reflected light pulse 1433 from a light pulse produced in response to the third trigger pulse (event marker 1413) arrives during the fourth data collection period (rectangle 624). However, due to the per-shot jitter, the arrival time (relative to the beginning of data collection) of reflected pulses differs from one shot to the next. Consequently, such late-arriving pulses would not be expected to create a peak in an accumulated histogram; instead, the range-aliasing peak would be spread out in a manner similar to crosstalk. In this case, the histogram might not have any significant peaks, which can result in a determination that the nearest reflective surface is out of range (which is the desired result) in this situation. Thus, in addition to reducing the effect of crosstalk, applying per-shot jitter as described herein can also reduce range aliasing, thereby further improving accuracy of ranging information.

### 5. Additional Embodiments

While the invention has been described with reference to specific embodiments, those skilled in the art with access to the present disclosure will appreciate that numerous variations and modifications are possible. For instance, LIDAR arrays of the kind described herein can be fabricated to include any number of rows and any number of columns per row. (The terms "row" and "column" are used to distinguish two dimensions of a sensor array, particularly in the context of arrays used in scanning mode, and are not intended to imply any particular spatial orientation of the array.) The particular construction of sensor channels and emitters can be varied. The emitter can emit a pulse train of one or more pulses during each shot, and jitter can be applied in the manner described above to vary the start times of the pulse trains for successive shots. Identification of reflected light can be based on detecting a pattern of intensity in the histogram that corresponds to the pattern of the pulse train.

LIDAR sensor channels (and/or other depth-sensing channels) can providing timing data in various forms, e.g., using histograms of photon count or signal intensity as a function of time. LIDAR sensor channels can operate at various wavelengths, including near infrared, shortwave infrared (e.g., 1600 nm), midwave infrared, and/or longwave infrared (e.g., up to 15 µm).

Sensor arrays of the kind described herein can be incorporated into a variety of sensing systems, including but not limited to the particular LIDAR systems described above. LIDAR systems can be implemented using rotating and/or static platforms as described above and can be used in any application where it is desirable to collect ranging data. Those skilled in the art with access to the present disclosure will appreciate that any of the techniques for detecting and/or reducing crosstalk described herein can be applied in a variety of LIDAR systems, including but not limited to any of the example systems described herein.

Data produced by a LIDAR system can be analyzed using a variety of computer-implemented algorithms operating on any portion of the data. In some embodiments, the data can be used to generate images for display to a user, which can include directly rendering the intensity data or range measurements computed from the intensity histogram and/or rendering an image of a scene (or portions thereof) based on algorithmic inferences from the data. While some examples described above relate to vehicle navigation and/or driver assistance, the invention is not limited to any particular data analysis or to any particular application of LIDAR technology.

The above description of exemplary embodiments of the invention has been presented for the purposes of illustration and description. It is not intended to be exhaustive or to limit the invention to the precise form described, and many modifications and variations are possible in light of the teaching above. The embodiments were chosen and described in order to explain the principles of the invention and its practical applications to thereby enable others skilled in the art to us the invention in various embodiments and with various modifications as are suited to the particular use contemplated. Thus, although the invention has been described with reference to specific embodiments, the invention should be understood as being limited only by the following claims.

## Claims

1. A LIDAR system comprising:
a light transmission module (206) having an emitter to emit a light pulse during each of a plurality of shots in response to a trigger pulse, wherein each shot includes the trigger pulse and a subsequent data collection period;
a light sensing module (208) having at least one light sensor channel to receive light and configured to generate, responsive to the trigger pulse, a histogram of received light intensity as a function of time for a sequence of time bins, the light sensing module further having a first memory circuit configured to accumulate the histogram across the plurality of shots;
a timing controller (217) coupled to the light transmission module and the light sensing module and configured to generate a sequence of trigger pulses to synchronize operation of the light transmission module and the light sensing module for each shot,
the timing controller being further configured to apply a per-shot jitter to each trigger pulse, wherein the per-shot jitter varies for different shots, and wherein, for at least some of the shots in the plurality of shots, the per-shot jitter is greater than one time bin,
wherein the LIDAR system is configured to analyze the histogram to infer possible crosstalk and to modify operation of the timing controller in response to inferring possible crosstalk.

2. The LIDAR system of claim 1 wherein the per-shot jitter is selected within a predefined range of jitter values using an equal-energy sampling technique.

3. The LIDAR system of claim 2 wherein the predefined range of jitter values is from zero to 20% of a total number of time bins in the histogram.

4. The LIDAR system of claim 2 wherein the predefined range of jitter values is from zero to 120% of a total number of time bins in the histogram.

5. The LIDAR system of claim 1 further comprising:
a second memory circuit configured to store a master jitter sequence containing a sequence of jitter values uniformly distributed over a range of jitter values,
wherein the timing controller is further configured to select the per-shot jitter for each trigger pulse according to the master jitter sequence; and
control logic to randomly select a starting position in the master jitter sequence during a system startup operation.

6. The LIDAR system of claim 1 further comprising:
a processor configured to analyze the histogram to determine whether crosstalk is present by:
identifying one or more time bins as peak time bins based on a photon count exceeding a threshold;
computing photon-count statistics for time bins other than the peak time bins, the photon-count statistics including a global mean photon count per time bin and a standard deviation of the photon count per time bin;
determining a local average photon count per time bin for the time bins other than the peak time bins; and
comparing the local average photon count to the global mean photon count to determine whether a difference between the local average photon count and the global mean photon count is significant based on a threshold defined relative to a measure of natural variability in noise,
wherein possible crosstalk is inferred based on whether the difference is significant.

7. The LIDAR system of claim 1 wherein the emitter emits a light pulse train consisting of one or more light pulses during each shot, the light pulses of the light pulse train having a fixed temporal relationship to each other.

8. The LIDAR system of claim 1 wherein:
the light transmission module includes a plurality of emitters;
the light sensing module includes a plurality of light sensor channels; and
the timing controller is configured such that the same per-shot jitter is applied to each of the plurality of emitters and to each of the plurality of light sensor channels.

9. A method of operating a LIDAR system, the method comprising:
capturing a plurality of shots, wherein each shot includes a trigger pulse and a subsequent data collection period wherein capturing each shot in the plurality of shots includes:
determining a per-shot jitter;
generating, in a timing controller (217) of the LIDAR system, a trigger pulse at a time determined based at least in part on the per-shot jitter;
operating a light-transmission module (206) of the LIDAR system to emit a light pulse synchronized with the trigger pulse; and
operating a light-sensing module (208) of the LIDAR system synchronously with the trigger pulse to receive light and to accumulate a histogram of received light intensity as a function of time, the histogram defining a series of time bins, wherein the histogram is accumulated across the plurality of shots and wherein, for at least some of the shots in the plurality of shots, the per-shot jitter is greater than one time bin; and
subsequently to capturing the plurality of shots, computing ranging information based at least in part on the histogram;
analyzing (1204) the histogram to infer (1206) possible crosstalk; and
modifying (1210) operation of the timing controller in response to inferring possible crosstalk.

10. The method of claim 9 wherein determining the per-shot jitter for each shot includes selecting the per-shot jitter within a predefined range of jitter values using an equal-energy sampling technique.

11. The method of claim 10 wherein the predefined range of jitter values is from zero to 20% of a total number of time bins in the histogram.

12. The method of claim 10 wherein the predefined range of jitter values is from zero to 120% of a total number of time bins in the histogram.

13. The method of claim 9 wherein determining the per-shot jitter for each shot includes accessing successive locations in a master jitter sequence stored in a memory of the LIDAR system.

14. The method of claim 9 further comprising:
adaptively modifying the per-shot jitter in response to determining that crosstalk is present.

15. The method of claim 9 wherein operating the light-transmission module of the LIDAR system includes operating a single emitter to emit a light pulse train consisting of one or more light pulses during each shot, the light pulses of the light pulse train having a fixed temporal relationship to each other.

## Patentansprüche

1. LIDAR-System, umfassend:
ein Lichtübertragungsmodul (206) mit einem Emitter zum Emittieren eines Lichtimpulses während jedes von einer Vielzahl von Schüssen in Reaktion auf einen Triggerimpuls, wobei jeder Schuss den Triggerimpuls und eine nachfolgende Datensammelperiode einschließt;
ein Lichtabfühlmodul (208), das mindestens einen Lichtsensorkanal zum Empfangen von Licht aufweist und dazu ausgelegt ist, in Reaktion auf den Triggerimpuls ein Histogramm einer empfangenen Lichtintensität als eine Funktion der Zeit für eine Sequenz von Zeit-Bins zu generieren, wobei das Lichtabfühlmodul ferner eine erste Speicherschaltung aufweist, die dazu ausgelegt ist, das Histogramm über die Vielzahl von Schüssen zu akkumulieren;
eine Timing-Steuerung (217), die mit dem Lichtübertragungsmodul und dem Lichtabfühlmodul gekoppelt ist und dazu ausgelegt ist, eine Sequenz von Triggerimpulsen zu generieren, um den Betrieb des Lichtübertragungsmoduls und des Lichtabfühlmoduls für jeden Schuss zu synchronisieren,
wobei die Timing-Steuerung ferner dazu ausgelegt ist, einen Pro-Schuss-Jitter auf jeden Triggerimpuls anzuwenden, wobei der Pro-Schuss-Jitter für unterschiedliche Schüsse variiert, und wobei der Pro-Schuss-Jitter für mindestens einige der Schüsse in der Vielzahl von Schüssen größer als ein Zeit-Bin ist, wobei das LIDAR-System dazu ausgelegt ist, das Histogramm zu analysieren, um auf mögliches Übersprechen zu folgern und den Betrieb der Timing-Steuerung in Reaktion auf Folgern von möglichem Übersprechen zu modifizieren.

2. LIDAR-System nach Anspruch 1, wobei der Pro-Schuss-Jitter innerhalb eines vordefinierten Bereichs von Jitterwerten unter Verwendung einer Abtasttechnik mit gleicher Energie ausgewählt wird.

3. LIDAR-System nach Anspruch 2, wobei der vordefinierte Bereich von Jitterwerten von null bis 20 % einer Gesamtanzahl von Zeit-Bins in dem Histogramm beträgt.

4. LIDAR-System nach Anspruch 2, wobei der vordefinierte Bereich von Jitterwerten von null bis 120 % einer Gesamtanzahl von Zeit-Bins in dem Histogramm beträgt.

5. LIDAR-System nach Anspruch 1, ferner umfassend:
eine zweite Speicherschaltung, die dazu ausgelegt ist, eine Master-Jitter-Sequenz zu speichern, die eine Sequenz von Jitterwerten enthält, die gleichmäßig über einen Bereich von Jitterwerten verteilt sind,
wobei die Timing-Steuerung ferner dazu ausgelegt ist, den Pro-Schuss-Jitter für jeden Triggerimpuls gemäß der Master-Jitter-Sequenz auszuwählen; und
Steuerlogik zum zufälligen Auswählen einer Startposition in der Master-Jitter-Sequenz während eines Systemstartvorgangs.

6. LIDAR-System nach Anspruch 1, ferner umfassend:
einen Prozessor, der dazu ausgelegt ist, das Histogramm zu analysieren, um zu bestimmen, ob Übersprechen vorhanden ist, durch:
Identifizieren eines oder mehrerer Zeit-Bins als Spitzenzeit-Bins basierend darauf, dass eine Photonenzählung eine Schwelle überschreitet;
Berechnen von Photonenzählungsstatistiken für andere Zeit-Bins als die Spitzenzeit-Bins, wobei die Photonenzählungsstatistiken eine globale mittlere Photonenzählung pro Zeit-Bin und eine Standardabweichung der Photonenzählung pro Zeit-Bin einschließen;
Bestimmen einer lokalen durchschnittlichen Photonenzählung pro Zeit-Bin für die Zeit-Bins außer den Spitzenzeit-Bins; und
Vergleichen der lokalen durchschnittlichen Photonenzählung mit der globalen mittleren Photonenzählung, um basierend auf einer Schwelle, die relativ zu einem Maß natürlicher Variabilität im Rauschen definiert ist, zu bestimmen, ob eine Differenz zwischen der lokalen durchschnittlichen Photonenzählung und der globalen mittleren Photonenzählung signifikant ist,
wobei mögliches Übersprechen basierend darauf gefolgert wird, ob die Differenz signifikant ist.

7. LIDAR-System nach Anspruch 1, wobei der Emitter während jedes Schusses eine Lichtimpulsfolge emittiert, die aus einem oder mehreren Lichtimpulsen besteht, wobei die Lichtimpulse der Lichtimpulsfolge eine feste zeitliche Beziehung zueinander aufweisen.

8. LIDAR-System nach Anspruch 1, wobei:
das Lichtübertragungsmodul eine Vielzahl von Emittern einschließt;
das Lichtabfühlmodul eine Vielzahl von Lichtsensorkanälen einschließt; und
die Timing-Steuerung so ausgelegt ist, dass derselbe Pro-Schuss-Jitter auf jeden der Vielzahl von Emittern und auf jeden der Vielzahl von Lichtsensorkanälen angewendet wird.

9. Verfahren zum Betreiben eines LIDAR-Systems, wobei das Verfahren umfasst:
Erfassen einer Vielzahl von Schüssen, wobei jeder Schuss einen Triggerimpuls und eine nachfolgende Datensammelperiode einschließt, wobei Erfassen jedes Schusses in der Vielzahl von Schüssen einschließt:
Bestimmen eines Pro-Schuss-Jitters;
Generieren eines Triggerimpulses zu einer Zeit, die zumindest teilweise basierend auf dem Pro-Schuss-Jitter bestimmt wird, in einer Timing-Steuerung (217) des LIDAR-Systems;
Betreiben eines Lichtübertragungsmoduls (206) des LIDAR-Systems, um einen Lichtimpuls zu emittieren, der mit dem Triggerimpuls synchronisiert ist; und
Betreiben eines Lichtabfühlmoduls (208) des LIDAR-Systems synchron mit dem Triggerimpuls, um Licht zu empfangen und ein Histogramm der empfangenen Lichtintensität als eine Funktion der Zeit zu akkumulieren, wobei das Histogramm eine Reihe von Zeit-Bins definiert, wobei das Histogramm über die Vielzahl von Schüssen akkumuliert wird, und wobei für mindestens einige der Schüsse in der Vielzahl von Schüssen der Pro-Schuss-Jitter größer als ein Zeit-Bin ist; und
Berechnen von Entfernungsmessungsinformationen zumindest teilweise basierend auf dem Histogramm nach dem Erfassen der Vielzahl von Schüssen;
Analysieren (1204) des Histogramms, um auf mögliches Übersprechen zu folgern (1206); und
Modifizieren (1210) des Betriebs der Timing-Steuereinheit in Reaktion auf Folgern eines möglichen Übersprechens.

10. Verfahren nach Anspruch 9, wobei Bestimmen des Pro-Schuss-Jitters für jeden Schuss Auswählen des Pro-Schuss-Jitters innerhalb eines vordefinierten Bereichs von Jitterwerten unter Verwendung einer Abtasttechnik mit gleicher Energie einschließt.

11. Verfahren nach Anspruch 10, wobei der vordefinierte Bereich von Jitterwerten von null bis 20 % einer Gesamtanzahl von Zeit-Bins in dem Histogramm beträgt.

12. Verfahren nach Anspruch 10, wobei der vordefinierte Bereich von Jitterwerten von null bis 120 % einer Gesamtanzahl von Zeit-Bins in dem Histogramm beträgt.

13. Verfahren nach Anspruch 9, wobei Bestimmen des Pro-Schuss-Jitters für jeden Schuss Zugreifen auf aufeinanderfolgende Orte in einer Master-Jittersequenz einschließt, die in einem Speicher des LIDAR-Systems gespeichert ist.

14. Verfahren nach Anspruch 9, ferner umfassend:
adaptives Modifizieren des Pro-Schuss-Jitters in Reaktion auf Bestimmen, dass Übersprechen vorhanden ist.

15. Verfahren nach Anspruch 9, wobei Betreiben des Lichtübertragungsmoduls des LIDAR-Systems Betreiben eines einzelnen Emitters einschließt, um eine Lichtimpulsfolge, die aus einem oder mehreren Lichtimpulsen besteht, während jedes Schusses zu emittieren, wobei die Lichtimpulse der Lichtimpulsfolge eine feste zeitliche Beziehung zueinander aufweisen.

## Revendications

1. Système LIDAR comprenant :
un module de transmission de lumière (206) comportant un émetteur pour émettre une impulsion lumineuse pendant chacun d'une pluralité de tirs en réponse à une impulsion de déclenchement, chaque tir comprenant l'impulsion de déclenchement et une période suivante de collecte de données ;
un module de détection de lumière (208) ayant au moins un canal de détection de lumière pour recevoir de la lumière et configuré pour générer, en réponse à l'impulsion de déclenchement, un histogramme de l'intensité lumineuse reçue en fonction du temps pour une séquence d'intervalles temporels, le module de détection de lumière ayant en outre un premier circuit de mémoire configuré pour accumuler l'histogramme sur la pluralité de tirs ;
un dispositif de commande de synchronisation (217) couplé au module de transmission de lumière et au module de détection de lumière et configuré pour générer une séquence d'impulsions de déclenchement pour synchroniser le fonctionnement du module de transmission de lumière et du module de détection de lumière pour chaque tir,
le dispositif de commande de synchronisation étant en outre configuré pour appliquer une gigue par tir à chaque impulsion de déclenchement, la gigue par tir variant pour différents tirs, et, pour au moins certains des tirs de la pluralité de tirs, la gigue par tir étant supérieure à un intervalle temporel,
le système LIDAR étant configuré pour analyser l'histogramme afin de déduire une diaphonie possible et de modifier le fonctionnement du dispositif de commande de synchronisation en réponse à la déduction d'une diaphonie possible.

2. Système LIDAR selon la revendication 1, la gigue par tir étant sélectionnée dans une plage prédéfinie de valeurs de gigue en utilisant une technique d'échantillonnage à énergie égale.

3. Système LIDAR selon la revendication 2, la plage prédéfinie de valeurs de gigue étant de zéro à 20 % d'un nombre total d'intervalles temporels dans l'histogramme.

4. Système LIDAR selon la revendication 2, la plage prédéfinie de valeurs de gigue étant de zéro à 120 % d'un nombre total d'intervalles temporels dans l'histogramme.

5. Système LIDAR selon la revendication 1, comprenant en outre :
un second circuit de mémoire configuré pour stocker une séquence de gigue maître contenant une séquence de valeurs de gigue uniformément réparties sur une plage de valeurs de gigue,
le dispositif de commande de synchronisation étant en outre configuré pour sélectionner la gigue par tir pour chaque impulsion de déclenchement en fonction de la séquence de gigue maître ; et
une logique de commande pour sélectionner aléatoirement une position de départ dans la séquence de gigue maître pendant une opération de démarrage du système.

6. Système LIDAR selon la revendication 1, comprenant en outre :
un processeur configuré pour analyser l'histogramme afin de déterminer si la diaphonie est présente par :
identification d'un ou plusieurs intervalles temporels en tant que intervalles temporels de crête sur la base d'un comptage de photons dépassant un seuil ;
calcul de statistiques de comptage de photons pour les intervalles temporels autres que les intervalles temporels de crête, les statistiques de comptage de photons comprenant un comptage de photons moyen global par intervalle temporel et un écart type du comptage de photons par intervalle temporel ;
détermination d'un nombre moyen local de photons par intervalle temporel pour les intervalles temporels autres que les intervalles temporels de crête ; et
comparaison du comptage moyen local de photons au comptage moyen global de photons pour déterminer si une différence entre le comptage moyen local de photons et le comptage moyen global de photons est significative sur la base d'un seuil défini par rapport à une mesure de variabilité naturelle du bruit,
une diaphonie possible étant déduite en fonction du fait que la différence est significative.

7. Système LIDAR selon la revendication 1, l'émetteur émettant un train d'impulsions lumineuses consistant en une ou plusieurs impulsions lumineuses pendant chaque tir, les impulsions lumineuses du train d'impulsions lumineuses ayant une relation temporelle fixe les unes par rapport aux autres.

8. Système LIDAR selon la revendication 1,
le module de transmission de lumière comportant une pluralité d'émetteurs ;
le module de détection de lumière comprenant une pluralité de canaux de détection de lumière ; et
le dispositif de commande de synchronisation étant configuré de telle sorte que la même gigue par tir est appliquée à chacun de la pluralité d'émetteurs et à chacun de la pluralité de canaux de détection de lumière.

9. Procédé de fonctionnement d'un système LIDAR, le procédé comprenant :
la capture d'une pluralité de tirs, chaque tir comprenant une impulsion de déclenchement et une période ultérieure de collecte de données, la capture de chaque tir dans la pluralité de tirs comprenant :
la détermination d'une gigue par tir ;
la génération, dans un dispositif de commande de synchronisation (217) du système LIDAR, d'une impulsion de déclenchement à un moment déterminé sur la base au moins en partie de la gigue par tir ;
le fonctionnement d'un module de transmission de lumière (206) du système LIDAR pour émettre une impulsion lumineuse synchronisée avec l'impulsion de déclenchement ; et
le fonctionnement d'un module de détection de lumière (208) du système LIDAR de manière synchrone avec l'impulsion de déclenchement afin de recevoir de la lumière et d'accumuler un histogramme de l'intensité lumineuse reçue en fonction du temps, l'histogramme définissant une série d'intervalles temporels, l'histogramme étant accumulé sur la pluralité de tirs et, pour au moins certains des tirs de la pluralité de tirs, la gigue par tir étant supérieure à un intervalle temporel ; et
suite à la capture de la pluralité de tirs, le calcul des informations de plage étant basé au moins en partie sur l'histogramme ;
l'analyse (1204) de l'histogramme pour déduire (1206) une diaphonie possible ; et
la modification (1210) du fonctionnement du dispositif de commande de synchronisation en réponse à la déduction d'une diaphonie possible.

10. Procédé selon la revendication 9, la détermination de la gigue par tir pour chaque tir comprenant la sélection de la gigue par tir dans une plage prédéfinie de valeurs de gigue en utilisant une technique d'échantillonnage à énergie égale.

11. Procédé selon la revendication 10, la plage prédéfinie de valeurs de gigue étant de zéro à 20 % d'un nombre total d'intervalles temporels dans l'histogramme.

12. Procédé selon la revendication 10, la plage prédéfinie de valeurs de gigue étant de zéro à 120 % d'un nombre total d'intervalles temporels dans l'histogramme.

13. Procédé selon la revendication 9, la détermination de la gigue par tir pour chaque tir comprenant l'accès à des emplacements successifs dans une séquence de gigue maître stockée dans une mémoire du système LIDAR.

14. Procédé selon la revendication 9, comprenant en outre :
la modification adaptative de la gigue par tir en réponse à la détermination de la présence d'une diaphonie.

15. Procédé selon la revendication 9, le fonctionnement du module de transmission de lumière du système LIDAR comprenant le fonctionnement d'un émetteur unique pour émettre un train d'impulsions lumineuses constitué d'une ou plusieurs impulsions lumineuses pendant chaque tir, les impulsions lumineuses du train d'impulsions lumineuses ayant une relation temporelle fixe les unes par rapport aux autres.
